(19) Europäisches Patentamt / European Patent Office / Office européen des brevets

(11) **EP 2 223 098 B1**

(12) **FASCICULE DE BREVET EUROPEEN**

(45) Date de publication et mention de la délivrance du brevet:
**23.11.2016 Bulletin 2016/47**

(21) Numéro de dépôt: **08872809.2**

(22) Date de dépôt: **16.12.2008**

(51) Int Cl.:
*G01N 29/04* (2006.01)     *G01N 29/28* (2006.01)
*G01N 29/44* (2006.01)     *G01N 29/06* (2006.01)
*G01N 29/38* (2006.01)

(86) Numéro de dépôt international:
**PCT/FR2008/001751**

(87) Numéro de publication internationale:
**WO 2009/106711 (03.09.2009 Gazette 2009/36)**

(54) **CONTROLE NON DESTRUCTIF, EN PARTICULIER POUR DES TUBES EN COURS DE FABRICATION OU A L'ETAT FINI**

NICHT DESTRUKTIVES TESTVERFAHREN, INSBESONDERE FÜR RÖHREN WÄHREND ODER NACH DER FERTIGUNG

NON-DESTRUCTIVE TESTING, IN PARTICULAR FOR TUBES DURING MANUFACTURE OR IN THE FINISHED STATE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **21.12.2007 FR 0709045**

(43) Date de publication de la demande:
**01.09.2010 Bulletin 2010/35**

(73) Titulaire: **V & M FRANCE**
**92100 Boulogne-Billancourt (FR)**

(72) Inventeurs:
• **LESAGE, Frédéric**
  **F-59880 Saint-Saulve (FR)**
• **SEGURA RODRIGUEZ, Nidia Alejandra**
  **F-59300 Valenciennes (FR)**
• **BISIAUX Bernard**
  **F-59300 Valenciennes (FR)**

(74) Mandataire: **Marsolais, Richard**
**Vallourec Tubes**
**DPI**
**27 avenue du Général Leclerc**
**92100 Boulogne-Billancourt (FR)**

(56) Documents cités:
**FR-A- 2 796 153     JP-A- 2003 279 550**

• **DUNLOP I ET AL: "Automated parameter extraction for ultrasonic flaw analysis" IEE PROCEEDINGS: SCIENCE, MEASUREMENT AND TECHNOLOGY, IEE, STEVENAGE, HERTS, GB, vol. 144, no. 2, 14 mars 1997 (1997-03-14) , pages 93-99, XP006008986 ISSN: 1350-2344 cité dans la demande**

EP 2 223 098 B1

**Description**

L'invention concerne le contrôle non destructif de matériaux, notamment pour des tubes en fabrication.

On connaît déjà différentes propositions, sur lesquelles on reviendra, tendant à utiliser les réseaux neuronaux dans le cadre du contrôle non destructif de matériaux. Mais cet existant n'est pas de nature à fonctionner en milieu industriel, sur des équipements déjà en service, en temps réel, et tout en permettant une classification au vol des imperfections selon leur nature, de sorte que l'on puisse remédier rapidement à un problème survenu en phase de production.

La demande de brevet français FR2903187 traite du contrôle non destructif.

Une autre demande , à savoir FR2796153, décrit un dispositif à capteurs ultrasonores formant outil d'aide à l'exploitation, pour le contrôle non destructif, en cours ou en sortie de fabrication, de produits sidérurgiques, tels que des tubes ou autres produits longs.

Un objet de l'invention est d'améliorer la situation vers un système qui puisse:

- être utilisé en milieu industriel et implanté facilement sur des équipements déjà existants dans ce milieu.
- être utilisé en temps réel, c'est-à-dire donner un diagnostic rapide, notamment à une vitesse suffisante pour ne pas ralentir la vitesse de production globale, et
- permettre une classification des imperfections selon leur nature, à partir d'une faible quantité d'informations, de manière à connaître leur gravité et à permettre la détermination de la cause technique à l'origine de l'imperfection et ainsi remédier rapidement au problème en phase de production.

Selon l'invention, il est proposé un dispositif qui forme outil d'aide à l'exploitation, pour le contrôle non destructif de tubes (ou autres produits sidérurgiques) en cours et en sortie de fabrication, tel que défini par la revendication 1. Un tel outil est destiné à tirer des informations sur d'éventuelles imperfections du produit. Des capteurs ultrasonores émetteurs sont excités sélectivement selon une loi de temps choisie. Des signaux de retour sont captés par des capteurs ultrasonores récepteurs formant un agencement de géométrie choisie, monté en couplage ultrasonore avec le tube par l'intermédiaire d'un milieu liquide. Enfin, il y a généralement un mouvement relatif de rotation/translation entre le produit et l'agencement de transducteurs.

L'outil d'aide à l'exploitation proposé comprend :

- un convertisseur, capable d'isoler sélectivement une représentation numérique de possibles échos dans des fenêtres temporelles désignées, en fonction du mouvement relatif de rotation/translation, et d'en tirer une image d'imperfections possibles dans le produit, ladite représentation comprenant l'amplitude et le temps de vol d'au moins un écho, et de générer un graphe 3D parallélépipédique,
- un bloc de transformation capable de générer une image 3D d'imperfections possibles dans le tube à partir du graphe 3D et d'une base de données,
- un filtre, capable de déterminer, dans les images, des zones d'imperfection présumée, ainsi que des propriétés de chaque imperfection présumée,
- un étage de sortie configuré pour générer un signal de conformité ou de non conformité d'un produit.

L'invention peut aussi se placer au niveau d'un dispositif de contrôle non destructif de tubes (ou autres produits sidérurgiques) en cours ou en sortie de fabrication, qui comprend :

- un agencement de transducteurs ultrasonores de géométrie choisie, monté en couplage ultrasonore avec le tube par l'intermédiaire d'un milieu couplant, avec mouvement relatif de rotation/translation entre le tube et l'agencement de transducteurs,
- des circuits pour exciter sélectivement ces éléments transducteurs selon une loi de temps choisie, et pour recueillir les signaux de retour qu'ils captent, et
- un outil d'aide à l'exploitation tel que ci-dessus.

L'invention concerne aussi un procédé de contrôle non destructif de tubes (ou autres produits sidérurgiques) en cours ou en sortie de fabrication, tel que défini par la revendication 14, comprenant les étapes suivantes :

a. prévoir un agencement de transducteurs ultrasonores de géométrie choisie, monté en couplage ultrasonore avec le tube par l'intermédiaire d'un milieu couplant, avec mouvement relatif de rotation/translation entre le tube et l'agencement de transducteurs,
b. exciter sélectivement ces éléments transducteurs selon une loi de temps choisie,
c. recueillir les signaux de retour qu'ils captent, afin d'analyser sélectivement ces signaux de retour, pour en tirer des informations sur d'éventuelles imperfections du tube, lesdites informations comprenant l'amplitude et le temps de vol d'au moins un écho et générer un graphe 3D parallélépipédique.

d. isoler sélectivement une représentation numérique de possibles échos dans des fenêtres temporelles désignées, en fonction du mouvement relatif de rotation/translation, et en tirer une image 3D d'imperfections possibles dans le tube à partir du graphe 3D parallélépipédique et d'une base de données,

e. générer un signal de conformité ou de non conformité d'un produit.

L'étape e peut comprendre:

e1. filtrer les images selon des critères de filtrage choisis, afin d'y déterminer des zones d'imperfection présumée Zcur, ainsi que des propriétés de chaque imperfection présumée,

e2. former des entrées numériques de travail, à partir d'un extrait des images correspondant à une zone d'imperfection présumée Zcur, de propriétés de l'imperfection présumée dans la même zone, issues du filtre; et de données de contexte,

e3. appliquer les entrées ainsi formées à au moins un agencement du genre circuit neuronal,

e4. traiter numériquement la sortie de l'agencement du genre circuit neuronal selon des critères de décision choisis, pour en tirer une décision et/ou une alarme, et

e5. écarter et marquer des tubes décidés non conformes par l'étape e4.

D'autres aspects, caractéristiques et avantages de l'invention apparaîtront à l'examen de la description détaillée ci-après de quelques modes de réalisation non limitatifs, ainsi que des dessins annexés sur lesquels :

- la figure 1 est une vue schématique en perspective d'un tube, ayant des imperfections ou défauts dits étalons;
- la figure 2 est une vue latérale schématique illustrant un exemple d'installation du type "contrôle à tête tournante" sur un tube en sortie de fabrication ;
- les figures 3A à 3C sont des détails de différents types de mesure d'épaisseur et de contrôle d'imperfections longitudinales et transverses ;
- la figure 4 est le schéma de principe de l'électronique associée à un capteur ultrasonore en contrôle non destructif dans une installation classique ;
- les figures 5A et 5B sont une vue en bout et une vue latérale d'un type particulier de cellule de contrôle non destructif, communément appelé "à tête tournante" et représenté schématiquement ;
- la figure 6 montre la complexité des trajets ultrasonores rencontrés dans un tube, sur un exemple simple ;
- les figures 6A et 6B sont des diagrammes temporels schématiques de signaux ultrasonores, pour un capteur sous incidence oblique, et pour un capteur sous incidence normale (perpendiculaire), respectivement ;
- la figure 7 est un graphe montrant une représentation classique de la sélectivité d'une installation de contrôle ;
- la figure 8 est un schéma de principe de l'électronique associée à un capteur ultrasonore en contrôle non destructif dans un exemple d'installation susceptible de mettre en oeuvre l'invention ;
- la figure 8A est un schéma fonctionnel plus détaillé d'une partie de la figure 8;
- la figure 8B est un autre schéma fonctionnel plus détaillé d'une partie de la figure 8;
- la figure 9 est une copie d'écran schématisée illustrant des images ultrasonores numérisées d'imperfections potentielles dans un tube;
- la figure 9A est une copie d'écran selon une autre orientation ;
- les figures 10A à 10D sont des représentations schématiques de différents types d'imperfections selon la classification API (American Petroleum Institute) et qui constituent les données de sortie du réseau neuronal tendant à déterminer le type de l'imperfection ;
- la figure 11 est le schéma fonctionnel plus détaillé d'une autre partie de la figure 8;
- la figure 11A est une vue de détail du bloc de transformation de la figure 11;
- la figure 12 est un diagramme séquentiel illustrant le traitement d'imperfections potentielles successives dans une image ;
- la figure 13 est le schéma fonctionnel d'un système de filtres;
- la figure 14 est le schéma fonctionnel d'un montage à réseau neuronal tendant à déterminer le type d'une imperfection dans un tube ;
- la figure 15 est le schéma fonctionnel d'un montage à réseau neuronal tendant à déterminer le degré de gravité d'une imperfection dans un tube ;
- la figure 16 est le schéma fonctionnel du modèle de neurone ;
- la figure 17 est un exemple de fonction de transfert d'un neurone élémentaire ; et
- la figure 18 est le schéma général d'une installation pour la détection des défauts sur différents types de capteurs.

Les dessins contiennent des éléments de caractère certain. Ils pourront donc non seulement servir à mieux faire comprendre la présente invention, mais aussi contribuer à sa définition, le cas échéant.

Dans la suite du présent texte, un capteur ultrasonore pourra être désigné indifféremment par les termes capteur, ou palpeur ou transducteur, bien connus de l'homme du métier.

Circuits neuronaux

L'utilisation de réseaux neuronaux dans le cadre du contrôle non destructif de matériaux a fait l'objet de nombreuses publications, la plupart du temps assez théoriques, que l'on considérera maintenant.

L'article "Localization and Shape Classification of Defects using the Finite Element Method and the Neural Networks" de ZAOUI, MARCHAND et RAZEK (NDT.NET-AOUT 1999, vol. IV n° abrégé 8) formule des propositions dans ce domaine. Cependant, ces propositions sont faites dans le cadre de manipulations en laboratoire, et l'application décrite ne permet pas une mise en oeuvre en ligne, en milieu industriel. En outre, seule la détection par courants de Foucault est traitée, ce qui est souvent insuffisant.

L'article "Automatic Detection of Defect in Industrial ultrasound images using a neural Network" de Lawson et Parker (Proc. of Int. Symposium on Lasers, Optics, and Vision for Productivity in Manufacturing I (Vision Systems: Applications), June 1996, Proc. of SPIE vol. 2786, pp. 37-47, 1996), décrit l'application du traitement d'images et des réseaux neuronaux à l'interprétation de ce que l'on appelle "scan TOFD". La méthode dite TOFD (Time of Flight Diffraction) consiste à repérer les positions du capteur ultrasonore où l'on peut observer une diffraction du faisceau sur les bords de l'imperfection, ce qui permet par la suite de dimensionner l'imperfection. Cette méthode est difficilement adaptable aux équipements de contrôle non destructif déjà existants, en particulier en milieu industriel.

L'article "Shape Classification of Flaw Indications in 3-Dimensional ultrasonic Images" de Dunlop et McNab (IEE Proceedings - Science, Measurement and Technology -- July 1995 -- Volume 142, Issue 4, p. 307-312) concerne le diagnostic en termes de corrosion de pipeline. Le système permet un contrôle non destructif en profondeur et permet une étude dans les trois dimensions et en temps réel. Cependant, le système est très lent. Cela rend son utilisation en milieu industriel relativement difficile.

L'article "Application of neuro-fuzzy techniques in oil pipelines ultrasonic nondestructive testing" de Ravanbod (NDT&E International 38 (2005) p 643-653) suggère que les algorithmes de détection de l'imperfection peuvent être améliorés par l'utilisation d'éléments de logique floue, mêlés au réseau de neurones. Cependant, les techniques étudiées concernent là aussi l'inspection d'imperfections de pipeline et un diagnostic sur des imperfections de corrosion.

DE 42 01 502 C2 décrit une méthode pour créer un signal destiné à un réseau de neurones, mais n'apporte que peu ou pas d'enseignements sur l'interprétation des résultats, en termes de diagnostic. En outre, une nouvelle fois, seule la détection par courants de Foucault est traitée.

La publication de brevet japonais 11-002626 concerne la détection d'imperfections longitudinales uniquement, et seulement par courants de Foucault.

La publication de brevet No. 08-110323 se contente d'une étude en fréquence des signaux obtenus par ultrasons.

La publication de brevet No. 2003-279550 décrit un programme pour faire la différence entre une zone qualifiée de saine et une zone mauvaise d'un produit en utilisant un réseau de neurones. Ce programme ne va pas plus loin, et ne permet pas la classification ni la localisation d'imperfections. En conséquence, l'application de ce programme peut fréquemment conduire au rejet de pièces qui seraient pourtant considérées comme bonnes si les résultats étaient interprétés par un opérateur humain.

Contrôle non destructif de tubes

La description détaillée ci-après est donnée essentiellement dans le cadre du contrôle non destructif de tubes en sortie de fabrication, à titre non limitatif.

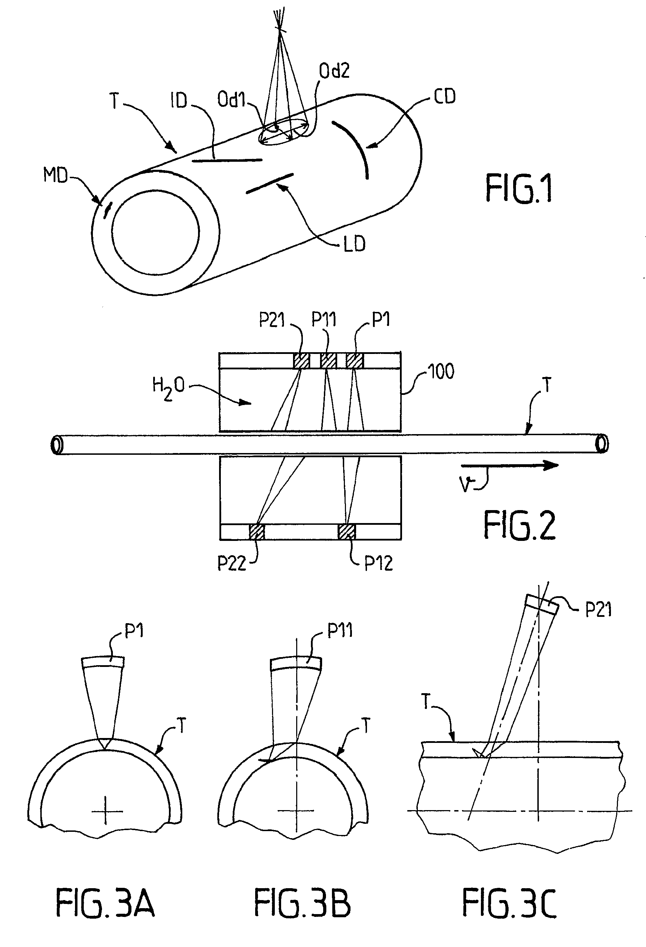

Comme indiqué sur la figure 1, les imperfections dans un tube T peuvent être distinguées d'après leur position. Ainsi, les imperfections de surface, interne ou externe, comprennent les imperfections longitudinales LD, et les imperfections circonférentielles (ou transverses ou travers ou transversales) CD et les imperfections obliques ou inclinées ID ; par différents agencements de capteurs, on cherche à les détecter dès qu'elles s'étendent sur une longueur et une profondeur définies selon les normes ou les spécifications ou cahiers de charges des clients (à titre d'exemple une valeur de longueur d'imperfection citée dans les normes est de 1/2 pouce, soit 12,7 mm environ avec une profondeur d'environ 5 % de l'épaisseur du produit contrôlé). On s'intéresse aussi aux imperfections « dans la paroi », c'est-à-dire dans la masse MD (non visibles sur la figure 1), qui correspondent souvent à des inclusions ou des dédoublures, que l'on cherche à détecter en même temps que l'on fait une mesure d'épaisseur. Les faisceaux ultrasonores sont représentés divergents sur la figure 1 pour faire comprendre la détection d'imperfections. En pratique, ils seront plutôt convergents, comme on le verra. De manière classique, en contrôle non destructif par ultrasons, on utilise l'un des trois types d'ins-

EP 2 223 098 B1

tallations suivants : les installations dites "à tête tournante", les installations dites "à tube tournant", et les installations à capteur encerclant multiéléments, toutes bien connues de l'homme du métier. Dans le cas d'utilisation de capteurs opérant en balayage électronique, la rotation relative tube/capteurs est virtuelle. Telle qu'utilisée ici, l'expression "mouvement relatif de rotation/translation entre le tube et l'agencement de transducteurs" couvre le cas où la rotation relative est virtuelle.

Sur la figure 2, la machine de contrôle non destructif à tête tournante comprend un dispositif à ultrasons proprement dit, monté sur une enceinte à eau ou "boîte à eau" 100, que traverse le tube T à la vitesse v = 0,5 mètre par seconde, par exemple. Les capteurs ou palpeurs à ultrasons émettent des ondes longitudinales dans l'eau. Un capteur donné travaille par exemple à 1 ou quelques MHz. Il est excité répétitivement par impulsions, de forme d'onde choisie, à une cadence (ou fréquence) de récurrence Fr qui est de l'ordre de quelques kHz ou dizaines de kHz, par exemple de 10 kHz.

Par ailleurs, un transducteur à ultrasons possède :

- un rayonnement de champ proche, pratiquement parallèle, dans une zone dite de Fresnel, siège de nombreuses interférences, dont la longueur dans l'axe du faisceau est

$$N = 0{,}25\,D^2\,/\,\lambda$$

où D est le diamètre de la pastille active du transducteur, et $\lambda$ sa longueur d'onde de travail, et
- un rayonnement de champ lointain, dans une zone dite de Fraunhofer, selon un faisceau divergent d'angle 2 $\alpha$, avec

$$\sin \alpha = 1{,}22\,\lambda\,/\,D$$

Les figures 3A, 3B, 3C représentent des capteurs rendus convergents au moyen d'une lentille (à ultrasons) concave, tels qu'ils sont couramment utilisés dans les applications de contrôle des tubes. On utilise de préférence la zone de Fraunhofer, moins perturbée.

Ainsi, pour des capteurs tels que P11 et P12, le faisceau d'ultrasons, qui est en général focalisé, s'étend au voisinage d'un plan perpendiculaire à l'axe du tube T. La détection se fait donc sensiblement en section droite. Leurs rôles sont les suivants:

- ou bien leur faisceau est également perpendiculaire à l'axe du tube T dans la section droite, et ils servent à la mesure d'épaisseur (par exemple P1, figure 3A); on parle alors de "palpage droit";
- ou bien leur faisceau est incident sur l'axe du tube T, en section droite, et ils servent à détecter les imperfections longitudinales (par exemple P11, figure 3B). Dans ce cas, l'angle d'incidence dans la section droite est, de préférence, choisi pour n'engendrer dans le tube que des ondes ultrasonores transversales ou de cisaillement, compte tenu des caractéristiques de l'interface eau/métal du tube (en principe eau/acier). On prévoit généralement deux capteurs P11 et P12, d'incidences opposées par rapport à l'axe du tube (figure 2).

La machine comprend aussi des capteurs tels que P21 et P22 dont, par contre, le faisceau d'ultrasons, qui est également focalisé en règle générale, s'étend au voisinage d'un plan passant par l'axe du tube, mais incident par rapport au plan perpendiculaire à l'axe du tube T (voir capteur P21, Figure 3C). Dans ce cas, l'angle d'incidence par rapport au plan perpendiculaire à l'axe du tube est de préférence choisi pour n'engendrer dans le tube que des ondes ultrasonores transversales ou de cisaillement, compte tenu des caractéristiques de l'interface eau/métal du tube (en principe eau/acier). Ces capteurs servent à détecter les imperfections transverses. On prévoit généralement deux capteurs P21 et P22, d'incidences opposées par rapport au plan perpendiculaire à l'axe du tube (figure 2).

Le contrôle des imperfections se fait généralement en focalisant le faisceau. Le point de focalisation se mesure par rapport au "bond", qui correspond au premier trajet aller-retour des ultrasons dans l'épaisseur du tube. Ainsi, le capteur de la figure 3A est focalisé au demi-bond, tandis que les capteurs des figures 3B et 3C sont focalisés à trois-quarts de bond. Par ailleurs, le contrôle des imperfections externes se fait généralement au bond, et celui des imperfections internes au demi-bond.

On note Ta le temps de présence requis pour que le palpeur puisse recevoir correctement le retour du faisceau d'ultrasons, représentatif d'une éventuelle imperfection. Ce temps Ta dépend de la somme des deux temps suivants:

- d'une part le temps de propagation aller-retour d'ondes ultrasonores longitudinales, sur la hauteur de la "colonne d'eau" présente entre le palpeur et le tube, sur le trajet des ultrasons,

- d'autre part le temps de propagation d'ondes ultrasonores transversales, tel qu'il est requis à l'intérieur du tube pour faire le contrôle non destructif lui-même. Ce temps dépend principalement d'un choix du nombre souhaité de réflexions des ondes transversales à l'intérieur de la paroi du tube.

Classiquement, les palpeurs sont entraînés en rotation autour de l'axe du tube, par des moyens non représentés, à une vitesse T de l'ordre de plusieurs milliers de tours par minute, (6000 tpm par exemple). Dans le cas également connu de l'homme du métier où c'est le tube qui est entraîné en rotation alors que les palpeurs ne sont pas entraînés en rotation (installation dite "à tube tournant") la vitesse de rotation du tube est de l'ordre de quelques dizaines à quelques milliers de tours par minute.

On peut appeler "cellule" chaque ensemble capteur - milieu de transmission (eau) - tube. Pour une cellule, on doit considérer en outre l'ouverture de faisceau Od des palpeurs à ultrasons en détection. Une ouverture peut être définie avec deux composantes (figure 1), l'une Od1 dans la section droite du tube, l'autre Od2 dans le plan passant par l'axe du tube et le palpeur.

Le réglage de l'installation (en fonction de la vitesse de rotation, de la vitesse de défilement, des dimensions Od1 et Od2 et du nombre de palpeurs) doit garantir un balayage par les faisceaux ultrasonores de l'ensemble des surfaces et du volume du tube à contrôler.

Il est à noter que certaines normes ou cahiers des charges ou spécifications des clients imposent un recouvrement des zones balayées.

Le temps d'analyse Ta est donc défini par un compromis entre:

- la cadence (ou fréquence) de récurrence Fr,
- en section droite du tube, la vitesse de rotation $\omega$, compte tenu de l'ouverture en détection Od1 des palpeurs à ultrasons (autrement dit, compte tenu de la rotation des capteurs, la composante Od1 de l'ouverture de faisceau doit permettre un temps de présence de l'imperfection en face des capteurs qui soit au moins égal à Ta),
- le long du tube, la vitesse de défilement v de celui-ci, compte tenu de l'ouverture en détection Od2 d'un palpeur à ultrasons, et du nombre NFi de palpeurs consacrés à la même fonction Fi (qui constituent donc un groupe de palpeurs), sur la périphérie du tube (autrement dit, compte tenu de l'avance du tube, la composante Od2 de l'ouverture de faisceau doit permettre un temps de présence de l'imperfection en face du capteur (ou du groupe de capteurs) qui soit au moins égal à Ta).
- le nombre de palpeurs dédiés au même rôle (c'est à dire à la même fonction), et
- les temps de propagation des ondes tels définis précédemment.

Classiquement, la machine comprend typiquement en tout deux capteurs tels que P11, P12 pour le contrôle des imperfections de type LD, et éventuellement ID, deux capteurs tels que P21, P22 pour le contrôle des imperfections de type CD, auxquels s'ajoute en principe un capteur tel que P1, pour la mesure de l'épaisseur du produit et le contrôle des imperfections de type MD. Chaque capteur peut être en fait un groupe de capteurs travaillant ensemble, comme on le verra.

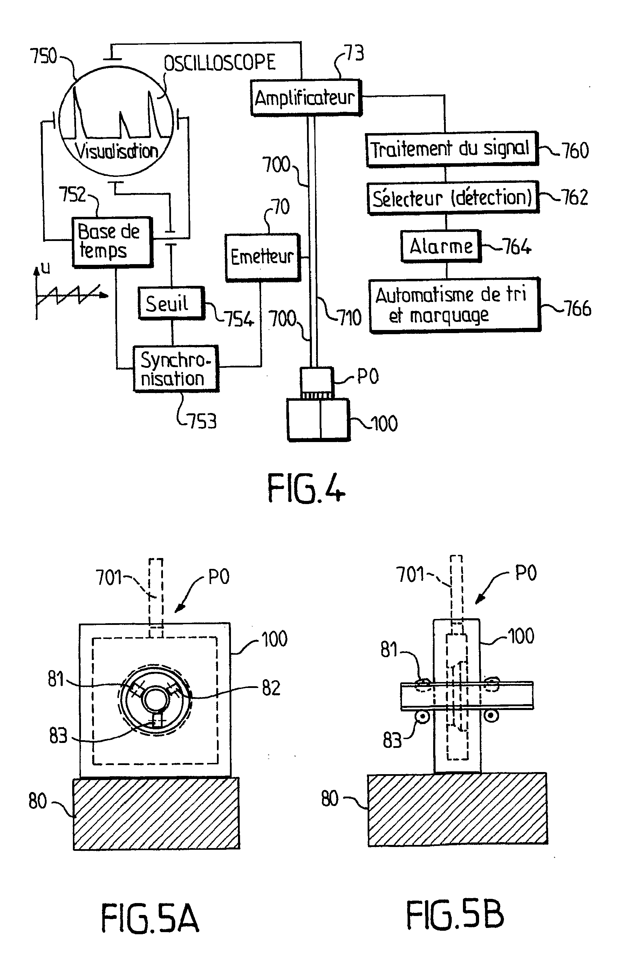

La machine possède, de façon intégrée ou à part, une électronique d'excitation et de détection associée à chacun des capteurs. Elle comprend (figure 4) un émetteur 70 d'impulsions, par exemple à 250 Volts pour l'excitation du palpeur P0 monté sur la boîte à eau 100. Comme partie intégrante du système de contrôle non destructif, le palpeur à ultrasons P0, ici émetteur/récepteur, reçoit les échos consécutifs à cette excitation. Les lignes 700 et 710 transmettent respectivement l'impulsion d'excitation et le signal aux bornes du palpeur à un amplificateur 73.

La sortie de l'amplificateur 73 sert à la visualisation pour l'opérateur et/ou au pilotage d'un automate de tri, capable d'écarter (en aval) les tubes non conformes.

La visualisation est par exemple réalisée par un oscilloscope 750, qui reçoit comme signal la sortie de l'amplificateur 73, et comme base de temps 752 un signal d'un étage de synchronisation 753 en provenance de l'émetteur 70. Un étage de seuil 754 évite l'aveuglement de l'oscilloscope au moment de l'impulsion d'émission.

Une autre sortie de l'amplificateur 73 va vers un étage de traitement de signal 760. Ce traitement comprend généralement un redressement, un lissage et un filtrage. Il est suivi d'un étage de détection ou sélecteur 762, capable d'isoler les échos significatifs, de manière connue. En détection de l'imperfection, c'est la présence d'un écho, avec son amplitude ou sa durée (donc son énergie), qui sont significatifs, dans certains créneaux temporels, essentiellement le demi-bond et le bond. Pour la détection en épaisseur, on vérifie que l'équivalent-distance de l'écart temporel entre les échos de fond respectifs correspond bien à l'épaisseur voulue du tube. Les anomalies détectées selon ces critères peuvent servir à émettre une alarme en 764, et/ou à piloter un automate 766 de tri qui évacue les tubes non conformes, en les marquant selon la ou les anomalies détectées.

Matériellement dans le cas d'une installation à tête tournante (figures 5A et 5B), la cellule comprend encore, sur un support mécanique 80, la boîte à eau 100, qui loge un ensemble capteur P0, avec une connexion 701, qui réunit les lignes 700 et 710 de la figure 4. On prévoit par exemple trois roulements 81 à 83 pour centrer le tube T.

Selon la technique connue (machine vendue par exemple par la société allemande GE NUTRONIK anciennement NUKEM), l'ensemble capteur P0 comprend des capteurs qui tournent à quelques milliers de tours/minute autour du tube. On peut également utiliser une pluralité de capteurs répartis en anneau autour du tube. L'anneau comprend par exemple 6 secteurs de 128 capteurs ultrasonores, répartis autour de la périphérie. Les secteurs de capteurs sont alternativement légèrement décalés dans le sens de l'axe du tube. Ceci permet d'avoir un recouvrement entre deux secteurs de capteurs consécutifs longitudinalement, et réduit également les problèmes d'interférences. L'interférence intervient lorsqu'un capteur donné reçoit des échos dus à un tir effectué sur un autre capteur.

A cela s'ajoute un banc (non représenté) de guidage du tube en amont et en aval du poste de contrôle non destructif, pour bien positionner le tube qui défile en continu, par rapport aux capteurs à ultrasons.

Le contrôle non destructif doit se faire sur toute la périphérie du tube. Mais il est également essentiel que ce contrôle suive la vitesse linéaire v du tube en sortie de fabrication. On en vient donc à un compromis entre la vitesse linéaire v du tube, la cadence (ou fréquence) de récurrence Fr, le temps d'analyse Ta, l'ouverture de travail Od du palpeur à ultrasons en détection, et la vitesse de rotation $\omega$, le nombre de capteurs assurant la même fonction et la vitesse de propagation des ondes ultrasonores.

Il est également souhaitable que la même installation puisse travailler sur toute une gamme de diamètres de tubes (et aussi d'épaisseurs de tubes), couvrant la gamme de production. Il est alors fréquent de prévoir plusieurs valeurs de la vitesse de rotation $\omega$ et de la fréquence de récurrence Fr, valeurs que l'on sélectionne en fonction du diamètre du tube à traiter.

On notera enfin que tout changement de fabrication implique un nouveau réglage des angles d'attaque des ultrasons de chaque capteur sur la périphérie du tube. Cette opération délicate, effectuée manuellement, prend couramment de l'ordre d'une demi-heure, temps pendant lequel la production de tubes est arrêtée. Telles sont les conditions dans lesquelles s'effectue actuellement le contrôle non destructif par ultrasons des tubes, ou d'autres produits profilés et/ou à parois minces, en sortie de fabrication.

Dans le domaine du contrôle non destructif par ultrasons, on utilise souvent la terminologie suivante :

-   « balayage » (ou « scan ») désigne une suite de positions relatives tube/capteur,
-   « incrément » désigne le pas de balayage (inversement proportionnel à la fréquence de récurrence ou fréquence de tirs ultrasonores),
-   « Ascan » désigne le graphe de la tension électrique mesurée aux bornes d'un capteur ultrasonore, avec en abscisse le temps de vol et en ordonnée une représentation de la tension électrique, appelée également amplitude ultrasonore,
-   « Bscan » désigne une image relative à une valeur donnée de l'incrément, avec, en abscisse, le balayage correspondant au tir ultrasonore, éventuellement exprimé en degré d'angle du capteur par rapport à la pièce à inspecter, en ordonnée le temps de vol, et en chaque point l'amplitude ultrasonore convertie en dégradé de gris ou de couleur,
-   « Echodynamique » désigne un graphe avec en abscisse l'indication du tir ultrasonore et en ordonnée l'amplitude maximale relevée dans un sélecteur temporel du Ascan pour le tir correspondant,
-   « Cscan » désigne une image avec en abscisse et en ordonnée la position équivalente dans un espace plan du point de tir de l'onde ultrasonore et représentant, convertie en dégradé de gris, l'amplitude ultrasonore maximale pour ce tir relevée dans le sélecteur temporel considéré du Ascan ("amplitude de l'image"). Dans le cas d'un tube, un point de l'abscisse du Cscan correspond à une position sur la longueur du tube et un point de l'ordonnée correspond à une position sur la circonférence du tube. Dans le cas d'un produit plat, un point de l'abscisse du Cscan correspond à une position sur la longueur du produit plat et un point de l'ordonnée correspond à une position sur la largeur du produit plat.

Par ailleurs, la demanderesse utilise dans la suite de la description les termes suivants:

-   « Bscan 3D parallélépipédique» qui désigne une représentation 3D comportant en outre la position du capteur sur l'axe du tube, la représentation étant considérée comme brute, la forme du tube n'apparaissant pas,
-   « Bscan 3D réduit» qui désigne un Bscan 3D parallélépipédique limité à une zone avec indication ultrasonore de défaut probable à l'issue des filtrages,
-   « Bscan 3D tube» qui possède les mêmes dimensions que le Bscan 3D parallélépipédique, les données étant représentées dans le tube inspecté, l'amplitude pouvant éventuellement constituer une dimension supplémentaire.

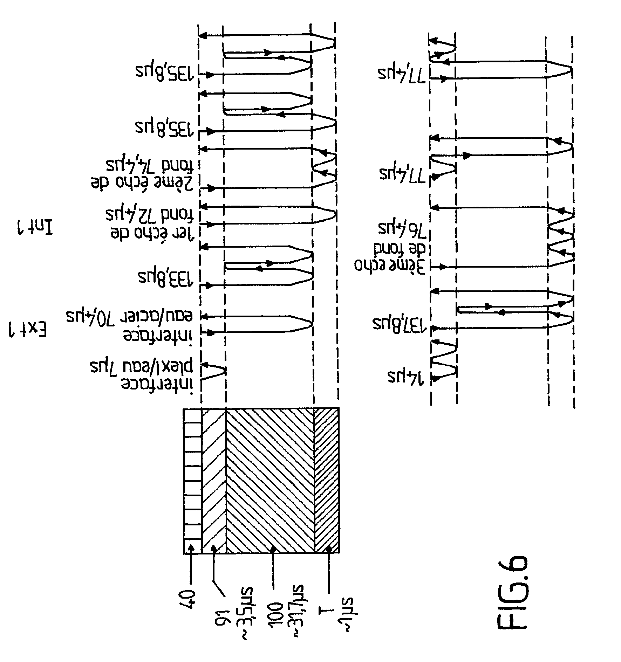

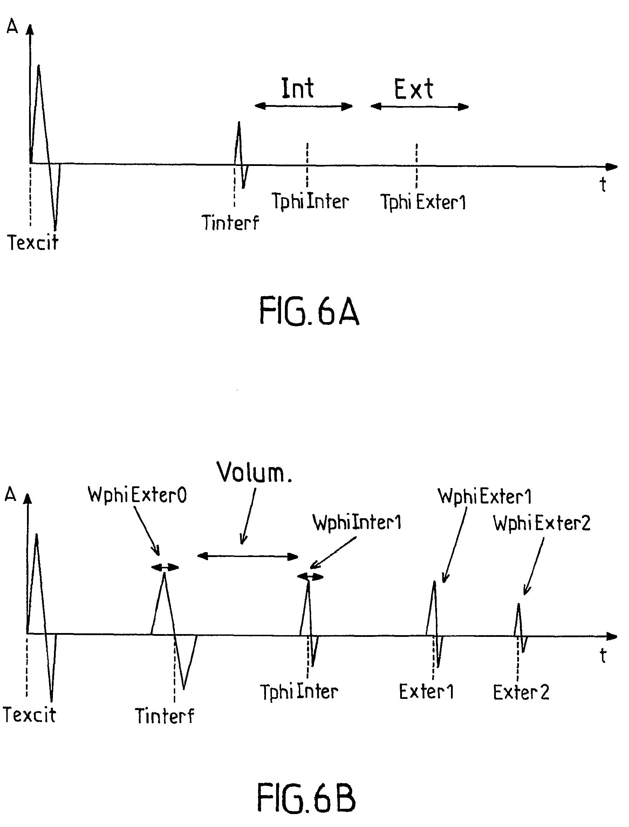

La figure 6 est une vue en coupe longitudinale schématique d'un système formé d'un capteur, de sa colonne d'eau et du tube, et avec illustration de différents trajets ultrasonores formant échos. Elle permet de bien comprendre la complexité de ces trajets, et la difficulté de l'analyse.

La figure 6A est un diagramme amplitude/temps schématique du signal ultrasonore au niveau d'un capteur qui travaille sous incidence oblique. A partir de l'instant Texcit d'excitation du capteur, on trouve un écho d'interface eau-tube à l'instant Tinterf (que l'on peut également noter TphiExter0). Sont marqués ensuite (trait pointillé vertical) l'instant TphiInter où le faisceau d'ultrasons atteint la peau interne du tube, où il se réfléchit et réfracte, ainsi que l'instant TphiExter1 où le faisceau d'ultrasons atteint la peau externe du tube. Du fait de l'incidence oblique, il n'y a pas d'écho réfléchi significatif qui revient au capteur en TphiInter en l'absence d'imperfection à cet endroit. Ceci vaut aussi en TphiExter1.

La figure 6B est un diagramme amplitude/temps schématique du signal ultrasonore au niveau d'un capteur qui travaille sous incidence normale. La chronologie générale des signaux est la même que pour la figure 6A (à un facteur près, lié à l'incidence). Par contre, sous incidence normale, il y a des échos significatifs en TphiInter et en TphiExter1, même en l'absence d'imperfection aux endroits concernés du tube.

Actuellement, les systèmes de contrôle non destructif utilisés en production de tubes fonctionnent en faisant le rapport K entre :

- l'amplitude As d'un signal provenant du tube à inspecter, et
- l'amplitude A0 du signal provenant d'un défaut étalon de référence, pour le type de contrôle considéré. Ce « défaut étalon de référence » est en général défini sur un tube étalon muni d'un défaut artificiel (par exemple une entaille en U ou en V) de caractéristiques dimensionnelles choisies, par exemple conformément à une norme de contrôle non destructif, et/ou au cahier des charges d'un client.

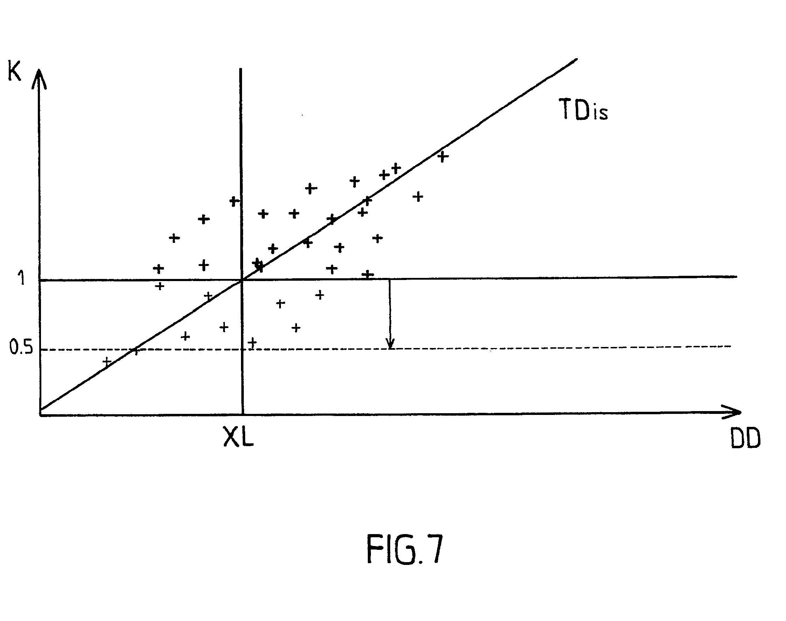

L'hypothèse implicite est que cette amplitude de signal est proportionnelle à la criticité de l'imperfection, c'est-à-dire à sa profondeur (DD). Le graphe de la figure 7 (bien connu de l'homme du métier, voir Nondestructive Testing Handbook - chapitre statistics du volume 7 publié par l'ASNT - American Society for Nondestructive Testing) représente la répartition réelle K = f(DD). Il montre qu'en réalité, la corrélation est très mauvaise (de l'ordre de 0.3 à 0.4 pour le contrôle par ultrasons).

Plus précisément, sur le graphe de la figure 7, si l'on fixe l'amplitude de référence A0 (K=1) sur la valeur XL (profondeur de l'imperfection maximum acceptable) au centre de la distribution (elle-même axée sur l'oblique TDis), on voit que l'on peut encore trouver des imperfections à K = 0,5 de profondeur DD supérieure à XL. Il s'ensuit que, par prudence, on est amené à fixer A0 pour une valeur nettement plus basse que XL. Par conséquent, on écarte en production des tubes qui, pourtant, seraient en fait satisfaisants. C'est d'autant plus néfaste, économiquement, que les techniques de fabrication de tubes demeurent assez lourdes, tant en complexité qu'en besoins en énergie.

La Demanderesse s'est donc attachée à améliorer la situation.

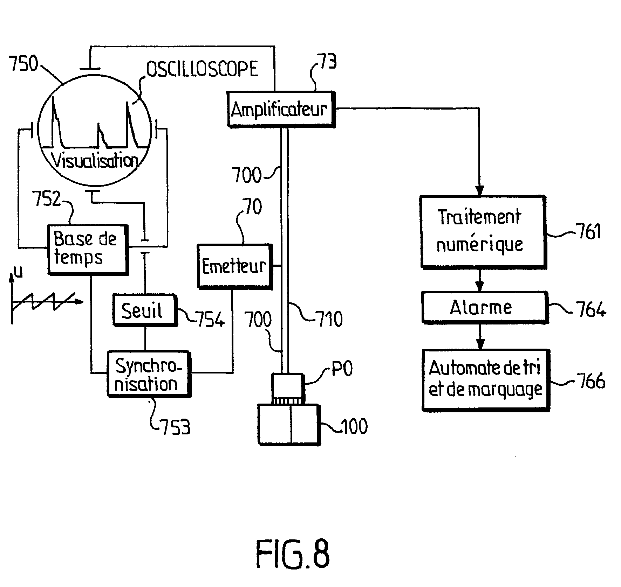

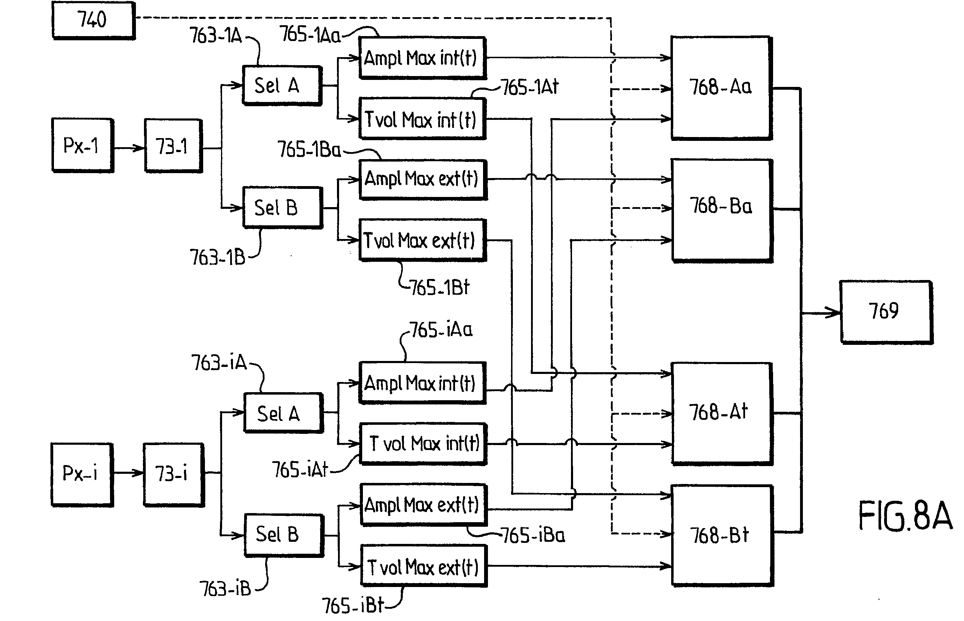

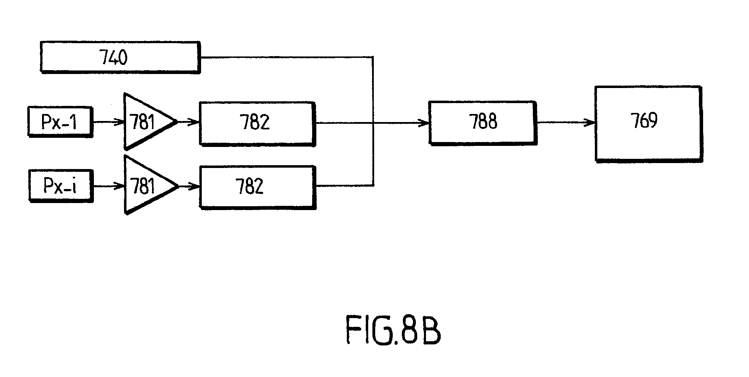

La figure 8 montre un dispositif amélioré par rapport à celui de la figure 4.

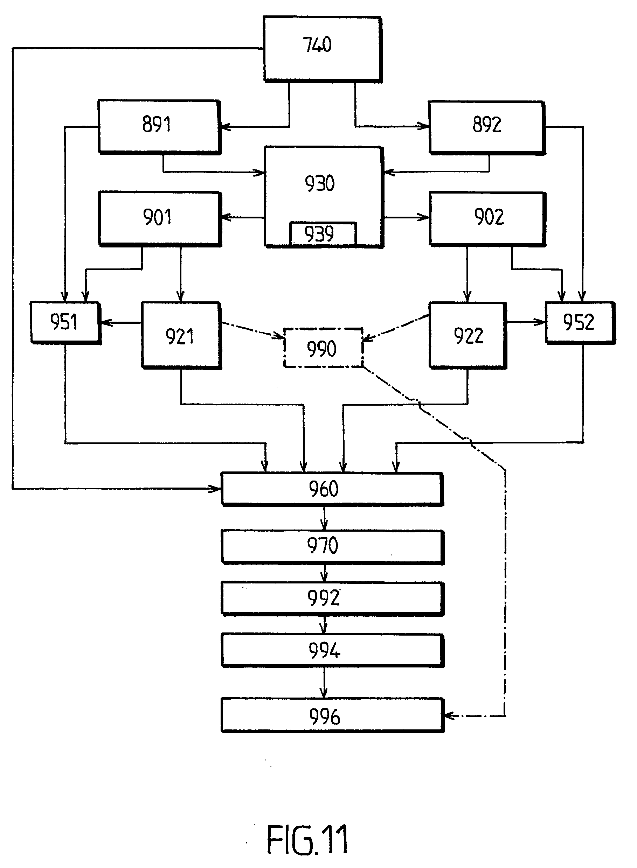

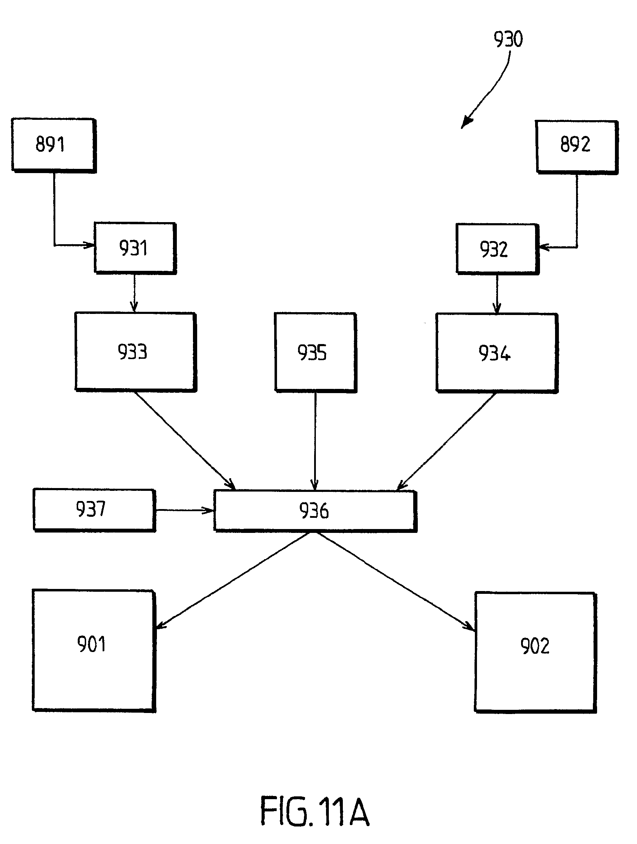

La sortie de l'amplificateur 73 est appliquée à un étage 761, qui numérise l'amplitude du signal issu de l'amplificateur 73, et travaille sur ce signal numérisé. Ce traitement sera décrit ci-après en référence à la figure 11. On peut conserver ensuite des étages 764 et 766 fonctionnellement semblables à ceux de la figure 4. Le signal brut du capteur, tel que visible sur l'oscilloscope 750, est dénommé A-Scan par les hommes du métier. Il comprend des échos selon le schéma défini par la figure 6.

Il est souhaitable de passer à une imagerie des imperfections du tube, à l'aide des signaux d'ultrasons. On décrira maintenant l'obtention d'une image.

En pratique, une image est obtenue en considérant plusieurs explorations successives du tube par un capteur Px, sous des angles successifs qui couvrent sensiblement une section droite du tube. Il est possible de le faire avec des tirs successifs par un seul capteur, en utilisant la rotation relative tube/capteur.

On se place ici, à titre d'exemple non limitatif, dans le cas d'une installation du genre dit à tête tournante.

Sur la figure 8A, on considère un capteur Px, qui peut être de l'un des types P1, P11, P12, P21 et P22 précité. Dans l'exemple illustré, ce capteur Px comprend en fait n capteurs élémentaires Px-1, ..., Px-i, ..., Px-n, qui sont alignés selon l'axe longitudinal du tube, et qui font l'objet d'un tir ultrasonore au même moment. Sur la figure 8A, ce qui est entre les capteurs élémentaires et le graphe 3D de sortie 769 peut être considéré comme un convertisseur.

Le signal Ascan du premier capteur élémentaire Px-1 est appliqué à un amplificateur 73-1, suivi de deux voies parallèles : celle du sélecteur 763-1A et celle du sélecteur 763-1B. Chaque sélecteur 763-1A comprend deux sorties respectivement d'amplitude maximale et de temps de vol. La sortie d'amplitude maximale est reliée à un numériseur de ligne 765-1Aa. La sortie de temps de vol est reliée à un numériseur de ligne 765-1At.

La sortie de numériseur de ligne 765-1Aa d'amplitude maximale est reliée à un stockage tampon de données 768-Aa recueillant les données provenant des numériseurs de ligne d'amplitude maximale 765-iAa d'indice i allant de 1 à n. La sortie de numériseur de ligne 765-1At de temps de vol est reliée à un stockage tampon de données 768-At recueillant les données provenant des numériseurs de ligne de temps de vol 765-iAt d'indice i allant de 1 à n. La sortie de numériseur de ligne 765-1Ba d'amplitude maximale est reliée à un stockage tampon de données 768-Ba recueillant les données provenant des numériseurs de ligne d'amplitude maximale 765-iBa d'indice i allant de 1 à n. La sortie de numériseur de ligne 765-1Bt de temps de vol est reliée à un stockage tampon de données 768-Bt recueillant les données provenant des numériseurs de ligne de temps de vol 765-iBt d'indice i allant de 1 à n.

Sur la base des informations obtenues lors du passage du tube étalon, l'opérateur peut saisir dans les stockages tampons 768-Aa et 768-At l'information T_1A correspondant à une indication de position et de largeur temporelle, qui lui désigne, en fonction de la géométrie connue du tube, les instants où il va trouver un « écho de peau interne », relatif à l'intérieur du tube par exemple le premier écho Int1 de la figure 6. La figure 6A montre plus nettement la fenêtre temporelle « Int » correspondante, autour de TphiInter.

De même, sur la base des informations obtenues lors du passage du tube étalon, l'opérateur peut saisir dans les stockages tampons 768-Ba et 768-Bt l'information T_1B correspondant à une indication de position et de largeur temporelle, qui lui désigne, en fonction de la géométrie connue du tube, les instants où il va trouver un « écho de peau externe », relatif à l'extérieur du tube, par exemple le premier écho Ext1 de la figure 6. La figure 6A montre plus nettement la fenêtre temporelle « Ext » correspondante, autour de TphiExter.

Le schéma se répète pour les autres capteurs Px-2, ... Px-i, ... Px-n.

Ainsi, chaque sélecteur temporel 763 définit des fenêtres temporelles compte tenu de l'instant d'émission des ultrasons, et des intervalles de temps prédéterminables où l'on peut attendre des échos concernant ce sélecteur. L'illustration des figures 6 montre comment l'on peut définir les intervalles de temps intéressants, compte tenu de l'angle d'attaque du faisceau d'ultrasons sur le tube, ainsi que du diamètre (interne ou externe) et de l'épaisseur du tube. Un intervalle de temps donné correspond à un écho donné en un point donné du tube, pour une position relative donnée entre le tube et le capteur.

Pour simplifier, on admet ici que les instants de tirs sont synchronisés sur la rotation relative tube/capteurs, de sorte qu'un capteur élémentaire travaille toujours sur la même génératrice longitudinale du tube. La sortie de son sélecteur fournit donc une suite espacée d'échantillons analogiques de signal, qui correspondent chacun à l'amplitude d'un écho attendu sur une paroi du tube. Ces échantillons du capteur Px-1 (par exemple) sont numérisés en 765.

Le synchronisme avec l'émission peut être assuré par une liaison (non représentée) avec l'émetteur 70, ou avec son déclencheur, le circuit de synchronisation 753, ou sa base de temps 752 (figure 8). L'affichage 750 peut être maintenu, si on le souhaite. Le système peut fonctionner sur tube tournant à vitesse sensiblement constante. Dans ce cas, la vitesse angulaire et l'avance du tube peuvent être mesurées à l'aide d'un codeur angulaire précis, par exemple le modèle RS0550168 fourni par la société Hengstler, et d'un vélocimètre laser, par exemple le modèle LSV 065 fourni par la société Polytec. Le tube peut aussi ne pas tourner, tandis que c'est le système de capteurs qui tourne. Dans ce cas, le vélocimètre laser suffit pour mesurer l'avance du tube, tandis que la vitesse de rotation des capteurs peut être connue au moyen d'un codeur angulaire.

Pour un tir donné, l'ensemble des capteurs Px-1 à Px-n fournit une ligne d'une image, qui correspond à une section droite du tube. Dans l'autre dimension de l'image, un capteur élémentaire donné fournit une ligne qui correspond à une génératrice du tube.

Les numériseurs 765-1Aa, 765-2Aa, ...,765-iAa, ..., 765-nAa et 765-1At, 765-2At, ...,765-iAt, ..., 765-nAt permettent de remplir une image « interne », relative à la peau interne du tube. Les numériseurs 765-1Ba, 765-2Ba, ...,765-iBa, ..., 765-nBa et 765-1Bt, 765-2Bt, ...,765-iBt, ..., 765-nBt permettent de remplir une image « externe », relative à la peau externe du tube, avec Tvol max le temps de vol de l'écho d'amplitude maximale.

Le graphe 3D parallélépipédique mémorisé en 769 vaut pour le capteur ou groupe de capteurs Px considéré. Chaque point de cette image correspond, transposé en nuances de gris, a une valeur d'amplitude de l'écho dû à la réflexion du signal ultrasons sur une imperfection éventuelle de la zone du tube considérée. Cette valeur peut également représenter le rapport entre l'amplitude maximale du signal ultrasonore capté sur le tube en cours de test et l'amplitude maximale du signal ultrasonore obtenu avec un « défaut étalon de référence » artificiel, tel que défini plus haut. Le graphe 3D parallélépipédique est une représentation du Bscan 3D préparatoire numérisé en 769 - préparatoire en ce sens qu'il sert de base à la génération du Bscan 3D tube. La forme du graphe 3D est généralement distincte de la forme du produit examiné, notamment pour les tubes.

Les informations du graphe 3D parallélépipédique peuvent comprendre l'ensemble des couples (temps de vol, amplitude) de la courbe AScan sur une durée de numérisation déterminée.

Les graphes 3D parallélépipédiques numérisés en 769 comprennent les graphes 3D parallélépipédiques 891 construits à partir des données provenant d'un groupe de capteurs P11 et les graphes parallélépipédiques 892 construits à partir des données provenant d'un groupe de capteurs P12 et respectivement P21 et P22 tel que représenté sur la figure 11.

Cette image correspond maintenant à une zone du tube, obtenue par la réunion des zones sensiblement annulaires du tube qui correspondent à chacune des lignes numérisées. En fait, il s'agit de zones annulaires ou hélicoïdales si le faisceau d'ultrasons est appliqué sensiblement perpendiculairement à l'axe du tube. On sait qu'il en est différemment selon le mouvement relatif tube/capteur. Les zones sont alors plutôt elliptiques et, en fait, gauches ou "tordues" dans l'espace. Dans la présente description, l'expression "zones annulaires" couvre ces différentes possibilités.

Il est à noter que pour obtenir une reconstitution complète du graphe 3D, l'information supplémentaire de positionnement du capteur par rapport au tube est nécessaire. Elle est disponible en entrée séparée 740. Cette information vient d'un codeur ou d'un ensemble de lasers permettant de mesurer le positionnement spatial. Comme le tube peut être assimilé à un cylindre sans épaisseur, l'information de position peut être réduite à deux dimensions.

On comprend que la mise en oeuvre de l'invention sur un banc existant de contrôle par ultrasons ("UT bench") implique :

- l'accessibilité aux données brutes de contrôle par ultrasons ("UT Raw Data"), qui se fait par exemple à l'aide d'une carte d'acquisition, comme le modèle NI 6024 série E ou NI 6251 série M de la société National Instrument, ou par accès direct aux données numériques d'une électronique de contrôle du banc,
- la disponibilité d'une information en ligne sur la vitesse de rotation (du tube ou capteur) ou la position angulaire relative du tube par rapport au capteur, et
- la disponibilité d'une information en ligne sur la vitesse d'avance du tube ou la position linéaire relative du capteur projetée sur l'axe.

Le schéma de la figure 8A peut être appliqué:

- en parallèle à un capteur de type P11 et à un capteur de type P12, qui observent la même zone du tube selon deux directions différentes. Chaque capteur va permettre d'obtenir une image interne et une image externe. Ensuite, l'une des images pourra être choisie en fonction d'une commande notée « Int/Ext ».
- en parallèle à un capteur de type P21 et à un capteur de type P22, qui, là aussi, vont chacun permettre d'obtenir une image interne et une image externe.

Le schéma de la figure 8A peut aussi être appliqué à un capteur de type P1, auquel cas on prévoit trois voies parallèles derrière chaque amplificateur (au moins virtuellement). L'une des voies fonctionne sur un créneau temporel répétitif positionné comme indiqué en « Volum. » sur la figure 6B. Cette voie permet un contrôle d'imperfections en volume, c'est-à-dire dans l'épaisseur du tube.
Les deux autres voies peuvent fonctionner respectivement sur les créneaux temporels répétitifs positionnés comme indiqué en « WphiExter0 » et en « WphiInter1 » sur la figure 6B. Ces deux autres voies permettent une mesure de l'épaisseur du tube.
La distinction entre les 3 voies est purement fonctionnelle (virtuelle). En effet, lesdites deux autres voies peuvent être physiquement la même, dans laquelle on discrimine les instants ou créneaux « WphiExter0 » et « WphiInter1 ». On peut aussi utiliser une seule voie physique, dans laquelle on discrimine les instants ou créneaux « WphiExter0 », « Volum. » et « WphiInter1 ».
Il est représentatif de décrire plus en détail le cas d'un capteur de type P11 avec un capteur de type P12. C'est ce que l'on fera maintenant.
Il est rappelé que ces deux groupes de capteurs P11 et P12 servent à la détection d'imperfections longitudinales sur les tubes. Le contrôle ultrasonore est réalisé avec des tirs d'ultrasons (US) dans deux directions privilégiées ("clock wise" - "counter clock wise"):

- Un capteur ou groupe de capteurs P11 fournit une image ultrasonore du tube dans une direction de travail ("clock wise").
- Un deuxième capteur ou groupe de capteurs P12 fournit une image ultrasonore du même tube dans une autre direction de travail ("counter clock wise").

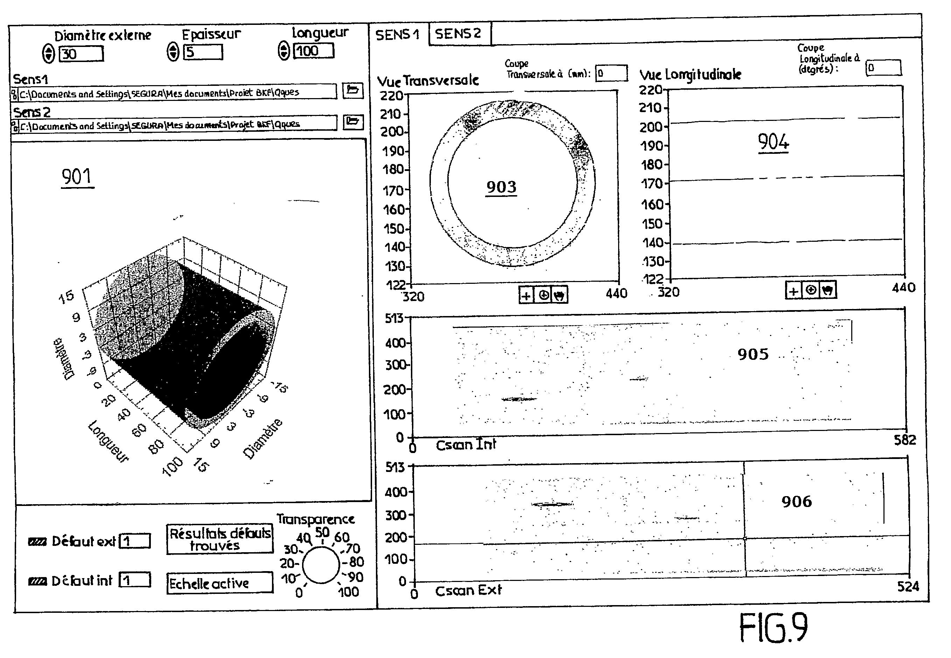

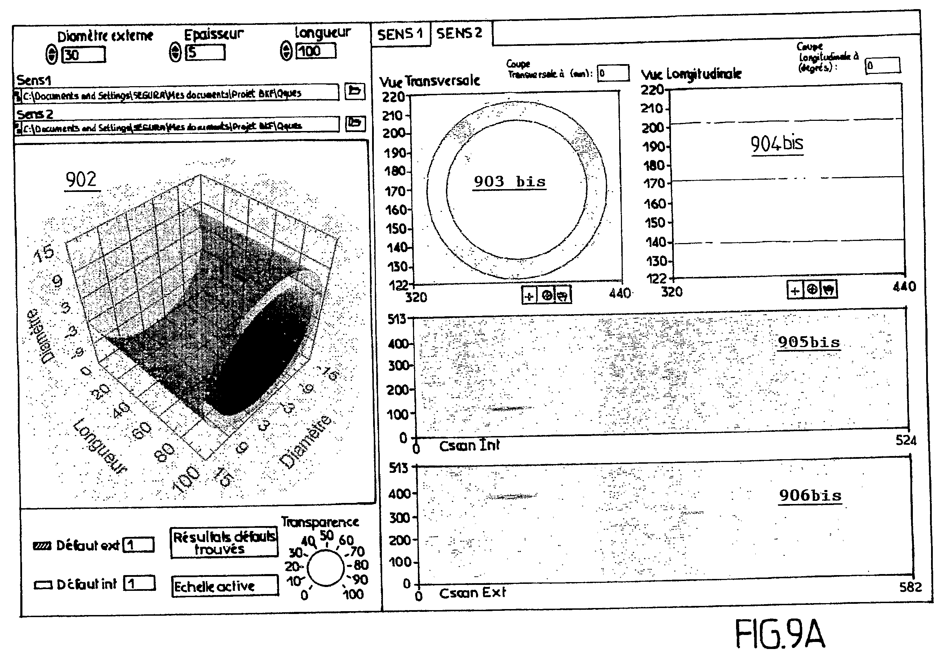

Ainsi, les imperfections longitudinales sont avantageusement détectées avec 2 capteurs ou groupes de capteurs dont les axes de faisceau sont inclinés symétriquement par rapport à un plan perpendiculaire à l'axe du tube. L'inclinaison est par exemple d'environ +/- 17°. Ceci fournit un exemple d'application du système à deux capteurs, ou deux groupes de capteurs, tel que mentionné plus haut.
Dans le mode de réalisation de la figure 8B, chaque fenêtre de numérisation 782 issue d'un amplificateur 781 peut être caractérisée par un début, une durée et une fréquence de numérisation qui définissent un nombre n de points du signal AScan pris en considération. Chaque fenêtre de numérisation 782 fournit alors un nombre n de couples d'information (Amplitude, Temps de vol), pour chaque tir ultrasonore. Le Buffer/Multiplexeur 788 remet l'ensemble des données ainsi recueillies dans le graphe 3D parallélépipédique 769 en tenant compte des positions respectives des capteurs au moment où le signal a été reçu, ceci à la fois grâce à la connaissance de la configuration géométrique des capteurs les uns par rapport aux autres, et grâce à l'information de positionnement tube/capteur au moment du tir ultrasonore 740.
Il est maintenant fait référence à la figure 9. Pour le premier sens de contrôle (onglet « sens 1 » sélectionné), les images 903 et 904 sont des vues en coupe (respectivement transversale et longitudinale) du Bscan 3D Tube, 3D avec la géométrie du tube, tel que décrit plus loin, provenant des capteurs P11. Le positionnement de ces coupes est fixé grâce aux paramètres « coupe transversale à (mm) » et « coupe longitudinale à (degrés) ». Les images 905 (interne) et 906 (externe) sont des CScans, tels que définis précédemment, l'image 905 (respectivement 906) se concentrant sur une zone temporelle du Ascan où les imperfections en peau interne (respectivement externe) sont censées être détectées. Les informations nécessaires à la reconstruction des images 905 et 906 proviennent du BScan 3D parallélépipédique 891 de la figure 11.

L'image 901 est une représentation 3D en transparence du Bscan 3D Tube d'une portion du produit à contrôler, portion dans laquelle sont identifiées des zones potentiellement intéressantes, telles que décrites plus loin. Les mêmes images 903 bis, 904 bis, 905bis, 906 bis et 902 sont reconstituées pour le deuxième sens de contrôle (onglet « sens 2 » activé), voir figure 9A.

Nous rappelons ici que la description précédente concerne la détection de défauts à orientation longitudinale. La même démarche s'applique pour la recherche de défauts transversaux (avec les groupes de capteurs P21 et P22).

Il est maintenant fait référence à la figure 11. Les blocs d'images 901 et 902 sont obtenues à partir des graphes 3D parallélépipédiques 891 et 892 au moyen du bloc de transformation 930 tel que détaillé en figure 11A. Le bloc convertisseur 891 de la figure 11 correspond au montage de la figure 8A, appliqué au capteur P11. De même, le bloc convertisseur 892 correspond lui aussi au montage de la figure 8A, mais appliqué au capteur P12. Les blocs convertisseurs 891 et 892 utilisent les données de contexte tube/capteurs du bloc 740. Ces données sont relatives aux caractéristiques du tube en cours d'examen et des capteurs en cours d'utilisation.

Le bloc de transformation 930 est disposé en aval des graphes 3 D parallélépipédiques 891 et 892 et peut présenter la structure illustrée sur la figure 11A. Le bloc de transformation 930 effectue un calcul temporel du parcours de la propagation des ondes dans le tube en prenant en compte la conversion de modes au moment de l'impact d'une onde ultrasonore sur un défaut. A l'impact, une onde transversale peut se transformer en onde longitudinale et vice versa. Le bloc de transformation 930 peut estimer la propagation de l'énergie du faisceau acoustique à partir de calculs de coefficients de transmission et de réflexion. Une analyse du spectre fréquentiel de l'Ascan peut être réalisée. Le bloc de transformation 930 peut comprendre une base de données 939 d'essais réels ou simulés permettant une comparaison avec les graphes 3D reçus. Le bloc de transformation 930 peur reconstituer l'image Bscan 3D avec la géométrie du tube.

Comme illustré sur la figure 11A, le bloc de transformation 930 comprend deux blocs 931 et 932 d'élimination de zones de Bscans 3D non utiles à partir d'un graphe 3D, le bloc 931 traitant les données des images 3D 891 et le bloc 932 traitant les données des images 3D 892, deux blocs 933 et 934 de filtrage par application d'une fenêtre temporelle simulée, en aval respectivement des blocs 931 et 932, un bloc de simulation théorique 935, un bloc de calcul de tolérance 937 alimentant un bloc d'algorithme inverse 936, le bloc 936 fournissant les images 901 et 902 définies précédemment.

L'élimination par les blocs 931 et 932 permet de réduire la quantité d'information traitée en conservant les zones potentiellement intéressantes à représenter de façon tridimensionnelle. Le filtrage peut être effectué en long à partir d'un Cscan. La longueur choisie peut être supérieure à la longueur d'une zone d'amplitude supérieure à un seuil. On peut ensuite traiter les Bscans 3D parallélépipédiques incluant une zone à imperfection potentielle.

Le filtrage par les blocs 933 et 934 peut être effectué en bornant la fenêtre temporelle par les échos d'interface et de fond. Ces blocs de filtrage peuvent également borner la zone angulaire du tube potentiellement intéressante et si nécessaire décaler ces zones afin de cerner et reconstituer complètement la zone potentiellement intéressante. Les images issues des blocs 933 et 934 sont des Bscan 3D réduits.

Le bloc de simulation théorique 935 peut comprendre une base de données de simulations, par exemple d'Ascans ou de Bscans 3D en fonction des types et position des défauts. La base de données peut comprendre des résultats simulés et/ou des résultats d'essais sur des défauts naturels et/ou artificiels. Le bloc d'algorithme inverse 936 peut comparer des Ascans ou Bscans 3D théoriques provenant du bloc de simulation théorique 935 et des Ascans ou Bscans 3D obtenus lors de l'inspection afin de déterminer l'Ascan ou le Bscan 3D théorique le plus proche et, par conséquent, le(s) défaut(s) le(s) plus probable(s). A titre d'exemple, le bloc d'algorithme inverse 936 compare un Ascan expérimental filtré correspondant à une position en longueur et à une position angulaire avec les Ascans théoriques sur cette même position en longueur et en développée. A titre d'autre exemple, le bloc d'algorithme inverse 936 compare un Bscan 3D issu d'un Bscan 3D réduit correspondant à une position en longueur avec les Bscans 3D théoriques sur cette même position en longueur. Les deux comparaisons peuvent être effectuées. Le meilleur ensemble de représentations théoriques des échos est alors l'ensemble présentant le plus petit écart par rapport aux données expérimentales.

Après le bloc de transformation 930 sont illustrés les filtres 921 et 922, voir figure 11, qui permettent notamment de réaliser des extraits des images, et de leurs données de préparation, en tant que données d'entrée réunies par le bloc combinateur 960 pour le traitement neuronal ou expert 970.

Dans le mode de réalisation décrit, le filtre 921 possède :

- une sortie de signal Zcur désignant une zone de travail dans l'image. Cette sortie est utilisée par une fonction d'extraction 951 qui réalise en conséquence un extrait de l'image (Cscan) pour la zone Zcur, et un accès à la préparation d'image 891 pour y obtenir des informations mémorisées (dites Ascan) relatives à la même zone Zcur. L'ensemble de ces données est transmis par la fonction d'extraction 951 au combinateur 960, comme entrées du traitement neuronal ou expert 970,

- une sortie fournissant des informations obtenues par filtrage, certaines au moins relatives à la zone Zcur, qu'il transmet comme entrée du traitement neuronal ou expert,
- en option (trait tireté) des sorties de données complémentaires filtrées vers une mémoire 990.

Il en est de même pour le filtre 922, avec la fonction d'extraction 952, pour la même zone courante Zcur.

Le système neuronal 970 alimente une logique de décision et d'alarme 992, qui pilote un automatisme de tri et marquage 994. Il peut être prévu une interface d'interprétation 996 par un opérateur, laquelle peut présenter tout ou partie des données contenues dans la mémoire 990, en rapport avec la portion de tube en cours d'examen. Les données contenues dans la mémoire 990 proviennent des filtres 921 et 922.

En plus de sa prédiction (origine, type et gravité de l'indication) le système neuronal 970 fournit une évaluation de la confiance que l'on peut apporter à cette prédiction. Cette information est accessible aux opérateurs qui disposent également de données complémentaires plus qualitatives telles que l'historique de la commande en cours ou les problèmes qui ont eu lieu au cours de l'élaboration du produit. L'opérateur, ou un spécialiste peut alors intervenir pour pondérer les prédictions en conséquence.

Ici, la figure 11 traite des informations provenant au minimum de deux groupes de capteurs assurant la même fonction ou destinés au même type de contrôle (les 2 groupes P11 et P 12 ou les 2 groupes P21 et P22). Le même schéma peut servir à traiter les informations provenant d'un plus grand nombre de groupes de capteurs destinés à des contrôles de type différent. Le nombre d'images traitées en même temps est augmenté d'autant.

La fonction primaire des filtres 921 et 922 est de déterminer des zones d'imperfections dans les images 901 et 902. De façon générale, le filtrage est agencé pour repérer les zones à analyser, et y distinguer les imperfections des autres indications. Le filtrage travaille sur deux portions homologues de deux images. Les deux filtres peuvent travailler conjointement.

Par balayage de l'image numérique, on localise d'abord les endroits de l'image où existent des imperfections potentielles. A cet effet, il est possible d'appliquer un seuil fixe établi par étalonnage.

On peut utiliser un seuil qui s'adapte au niveau de bruit en cours dans l'image. La méthode est fondée sur la théorie de la détection d'un signal dans un bruit blanc, qui peut se fonder sur deux hypothèses :

Hypothèse H0 : mesure = bruit blanc de moyenne $m\_b$ et d'écart-type $std\_b$
Hypothèse H1 : mesure = signal + bruit blanc

On procède à des tests statistiques, qui permettent de déterminer si l'on est dans le cadre de l'hypothèse H0, ou de l'hypothèse H1. Ces calculs statistiques sont effectués en temps réel sur n points glissants de l'image correspondant à des tirs consécutifs, le nombre n pouvant être déterminé par l'apprentissage.

Selon cette méthode (cas dit "additif gaussien"), on peut par exemple utiliser le critère de Neyman-Pearson pour déterminer un seuil de détection selon une probabilité de fausse-alarme (pfa) donnée. Cela s'exprime par la formule [21] annexée. On utilise la fonction cumulative gaussienne, nommée en général Q (ou encore la fonction d'erreur erf), qu'il faut inverser pour obtenir le seuil, selon la formule [22] annexée.

En pratique, on constate fréquemment la présence de bruit de fond pouvant avoir plusieurs origines (par exemple: présence d'eau à l'intérieur du tube, ronflement électrique, phénomènes acoustiques dus à la structure de la matière du produit contrôlé).
L'usage d'un seuil variable évite les fausses alarmes qui se produisent si l'on applique un seuil fixe.

Parmi les autres fausses indications susceptibles d'apparaître, les parasites se manifestent par des pics très brefs dans le signal d'ultrasons. Ces parasites peuvent être écartés par des algorithmes simples que l'on peut appeler algorithmes de comptage cumulatif ou encore intégrateurs (exemple: "n coups avant alarme" ou "double seuil").

La demanderesse a encore considéré la "spire", qui est le trajet suivi par le capteur le long de la surface cylindrique à laquelle le tube est assimilé. Un filtrage peut être effectué le long de chaque spire pour encore réduire le taux de fausses alarmes. On utilise à cet effet par exemple un filtre de Butterworth, et/ou une transformée de Fourier discrète, telle qu'une transformée de Fourier rapide. Cette technique est appliquée à chaque ligne numérique.

Le même genre d'algorithme peut être appliqué dans le sens de la longueur du tube.

Ainsi, des imperfections potentielles sont localisées. Lorsqu'une imperfection est repérée, sa position correspond à la position analysée dans les images de la figure 9 (par exemple), avec une image 3D, une coupe transversale et une coupe axiale. Les indications de position radiale/épaisseur (ou plus simplement de situation interne, externe ou en masse de l'imperfection) peuvent être représentées comme des attributs des points de l'image. On aura ainsi:

- deux images 2D représentant les imperfections éventuelles en peau externe du tube,
- deux images 2D représentant les imperfections éventuelles en peau interne du tube, et
- une image 2D représentant les imperfections éventuelles dans l'épaisseur du tube.

On considère maintenant les imperfections « confirmées », après élimination des parasites et des fausses alarmes, notamment.

Pour la suite, la Demanderesse a choisi actuellement de travailler sur une zone d'image de taille fixe. Il faut donc cadrer cette zone sur les données d'existence d'imperfection que l'on vient d'obtenir.

Autrement dit, il y a lieu de positionner les points repérés comme étant supérieurs au seuil pour déterminer la zone complète autour d'une imperfection. C'est un besoin par exemple, si l'on souhaite déterminer l'obliquité d'une imperfection.

L'algorithme s'articule autour de différentes étapes :

- détection de contour (gradient de Roberts par exemple),
- dilatation (rassemblement des contours proches),
- érosion, puis fermeture, ce qui permet de déterminer un masque autour des imperfections,
- une dernière étape d'entourage permet de localiser complètement l'imperfection.

Pour chaque imperfection, on obtient ainsi les coordonnées de la zone d'image correspondante, qui seront utiles pour l'analyse par réseau de neurones qui intervient ensuite.

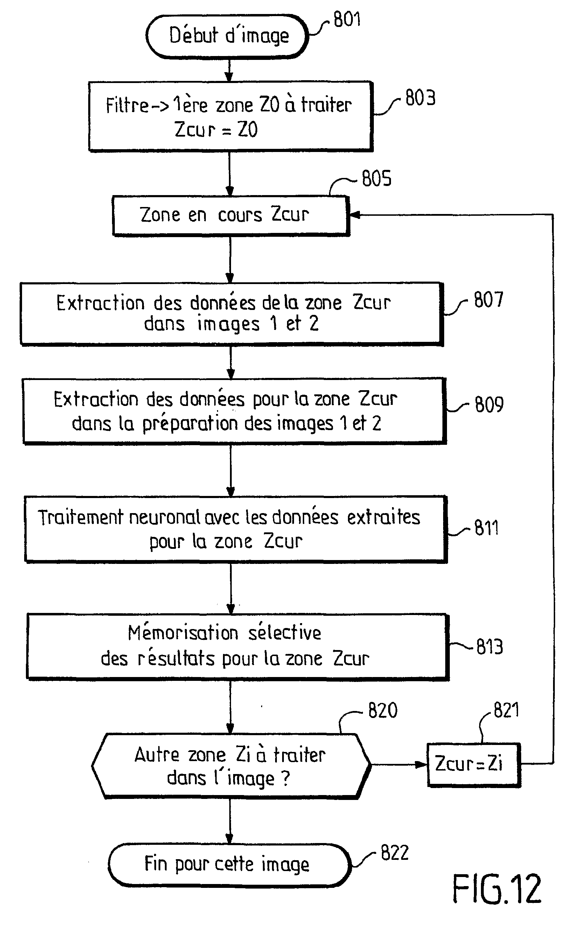

La figure 12 illustre ce traitement des zones d'image sous la forme d'un diagramme de flux.

En début d'images (801), on a de zéro à *p* zones d'image à traiter, comme présentant une imperfection confirmée. L'opération 803 suppose qu'il existe au moins une première zone, laquelle sert de zone courante à traiter Zcur en 805. Pour cette zone Zcur :

- l'opération 807 extrait sélectivement les données des images 901 et 902 qui correspondent à cette zone (définie par ses coordonnées dans l'image).
- l'opération 809 extrait sélectivement des données qui sont intervenues dans la préparation des images 901 et 902, et qui correspondent à la zone Zcur. Des exemples de ces données seront donnés ci-après.
- l'opération 811 réalise le traitement neuronal ou expert proprement dit, sur lequel on reviendra.
- Les résultats obtenus pour la zone Zcur sont mémorisés sélectivement en 813, en correspondance d'une désignation de la zone Zcur.
- Le test 820 recherche s'il existe une autre zone à traiter dans l'image, auquel cas on recommence en 805 avec cette autre zone comme indiqué en 821 ; sinon le traitement de la ou des images en cours est terminé (822).

Dans le cas du traitement du capteur P1, il n'y a qu'une seule image, ce qui change le nombre de paramètres d'entrée. A part cela, le traitement peut être généralement le même.

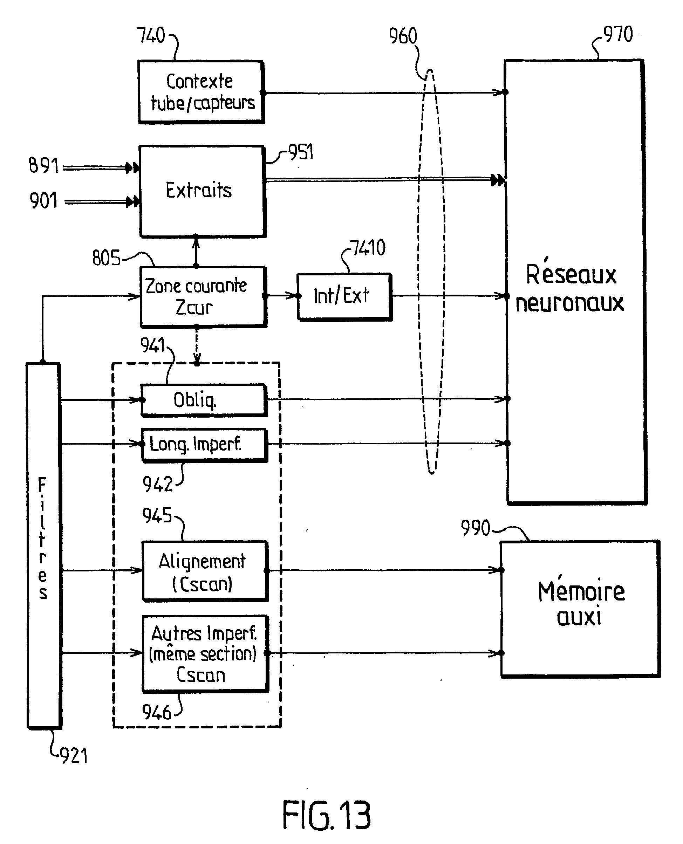

Après la détermination de chaque zone d'intérêt Zcur, le filtrage peut comporter d'autres fonctions. Pour ces autres fonctions, la figure 13 illustre de façon schématique l'interaction entre le filtrage et la suite des opérations illustrées sur la figure 11.

La figure 13 est semblable à la figure 11, mais seulement pour l'image 901. Elle fait apparaître :

- les éléments de contexte tube-capteurs du bloc 740,
- l'extracteur 951 qui trouve les données pour la zone Zcur, dans l'image 901 et sa préparation 891,
- un bloc interne/externe 7410, indiquant si l'imperfection dans la zone Zcur considérée est située en peau interne ou en peau externe.

Ce que le filtrage ajoute aux données de base, est défini en plus de détails à savoir, pour chaque zone Zcur (bloc 805), comme l'indique le contenu du cadre en trait tireté :

- une recherche de l'angle d'obliquité en 941,
- une indication de longueur d'imperfection 942,

Il peut s'y ajouter encore, notamment :

- une indication d'alignement en C-Scan, en 945, et
- en 946, une indication sur l'existence d'autres imperfections dans la même section droite du tube.

Dans le mode de réalisation décrit, les données telles que 945 et 946 vont vers la mémoire 990. Les autres données vont vers les réseaux neuronaux ou systèmes experts 970. Ceux-ci sont ici séparés en deux fonctions, comme on le verra maintenant.

Une imperfection dans un tube peut être définie par sa position, son type, et sa gravité souvent assimilée à sa profondeur. Dans le mode de réalisation décrit, le type et le degré de profondeur d'une imperfection de tube sont déterminés séparément à l'aide de deux processus neuronaux de même structure générale, que l'on détaillera maintenant sur un exemple.

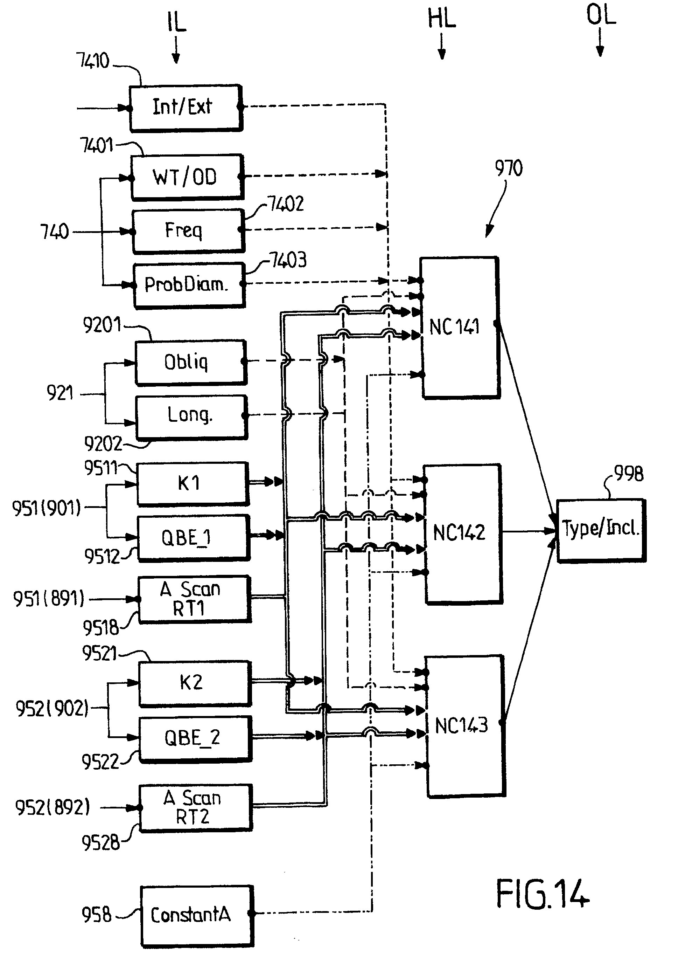

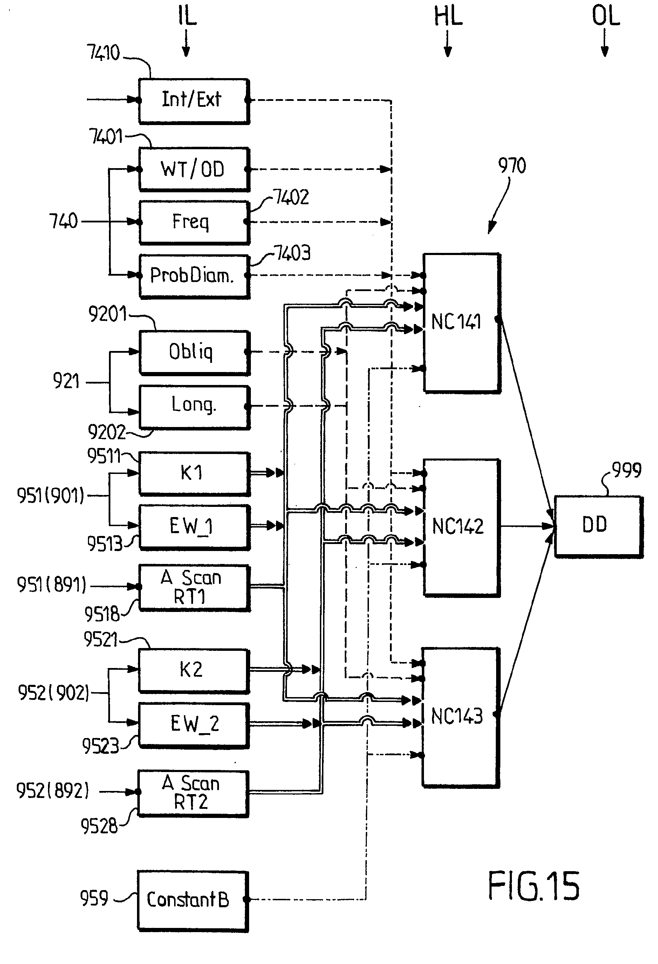

Le cas du type de l'imperfection est traité selon la figure 14, tandis que le cas de la gravité est traité selon la figure 15.

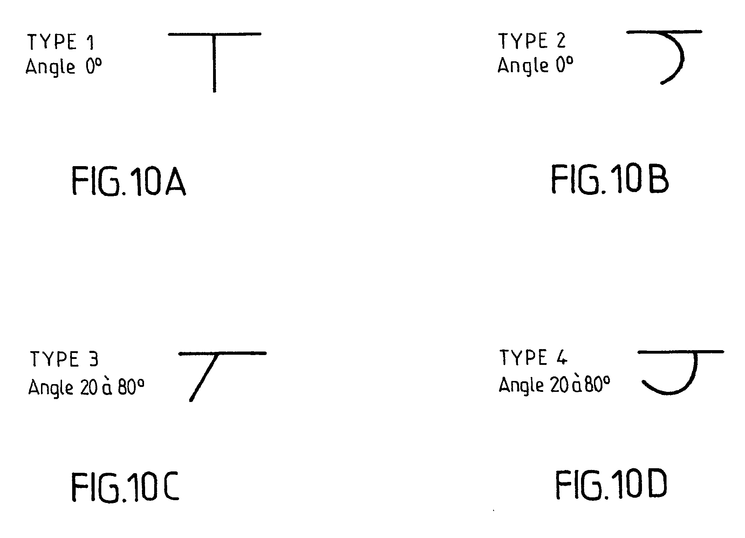

Les types peuvent être définis par exemple comme illustré sur les figures 10A à 10D. Ces figures illustrent quatre types, constituant un choix simplificateur par rapport à la liste des imperfections fournies par l'API et pouvant être produits par les processus d'élaboration du tube. Les intitulés en français et en anglais sont ceux utilisés par les hommes du métier pour désigner la nature des imperfections. On observe que les imperfections des types 1 et 3 sont droites, celles des figures 2 et 4 arquées (à "chord").

Une correspondance entre les imperfections réelles et les quatre types ci-dessus peut être définie comme suit :

| Nom en français | Nom en anglais | Affectation |
|---|---|---|
| Entaille | Notch | TYPE 1 |
| Tapure | Crack | TYPE 1 |
| Paille/repliure perpendiculaire ou droite (laminage) | Seam (perpendicular) | TYPE 1 |
| Paille/repliure (laminage) | Seam (arcuate), "overlap" | TYPE 2 |
| Gravelure | Sliver | TYPE 3 |
| Origine billette | Rolled-in-slug | TYPE 4 |
| Rayure | Gouge | TYPE 4 |
| Inclusion | Inclusion | TYPE 4 |
| Manque de matière ("défourni") | Bore-slug | TYPE 4 |
| Chevauchement/recouvrement/repliure | Lap | TYPE 4 |

Ici, les figures 14 et 15 utilisent toutes deux des circuits neuronaux à trois neurones intermédiaires (ou "neurones cachés"), notés NC121 à NC123 pour la figure 14, et NC141 à NC143 pour la figure 15.

Les figures 14 et 15 ont en commun un certain nombre d'entrées. Pour tenter de faciliter la compréhension, les entrées sont illustrées par des types de traits différents.

Les traits doubles indiquent que les entrées sont multiples, c'est-à-dire répétées pour chaque point de la zone Zcur.

Tout d'abord, en 7410, il provient, conformément à l'état considéré des sélecteurs 763 concernés, une information indiquant s'il s'agit de traiter d'une imperfection située en peau interne ou en peau externe de la paroi du tube. Cette information peut également être obtenue sur le BScan 3D.

La seconde catégorie de grandeurs d'entrée communes comprend les grandeurs de contexte, qui viennent du bloc 740 (figure 13) :

- en 7401, *WT/OD,* qui est le rapport de l'épaisseur de paroi au diamètre du tube,
- en 7402, *Freq,* qui est la fréquence de travail des sondes à ultrasons,
- en 7403, *ProbDiam,* qui est le diamètre utile des sondes à ultrasons.

La troisième catégorie de grandeurs communes comprend des quantités issues du filtrage qui peuvent être considérées comme communes aux deux capteurs 921 et 922 (ou plus). On fait par exemple la moyenne des résultats sur les deux capteurs, ou bien on prend le résultat le plus représentatif (maximum/minimum, suivant le cas) Ces quantités sont les grandeurs en 9201, l'obliquité du défaut, et en 9202 sa longueur. Ces deux grandeurs sont aisément repérables sur les deux images de la figure 9, qui ont une symétrie miroir.

Il est maintenant fait référence à la figure 14 seulement. La catégorie suivante de grandeurs comprend des grandeurs de mesures distinctes pour chacun des deux capteurs (ou groupe de capteurs), et pour chacune des zones Zcur, ce qui est reflété sur le dessin par l'usage d'un trait double.

Pour un premier capteur, on a :

- en 9511, *K1,* qui est le rapport entre l'amplitude maximale du signal ultrasonore rencontré dans la zone Zcur et sur l'image 901, par rapport à l'amplitude maximale du « défaut étalon de référence » précité. En fait, dans l'exemple, l'amplitude en chaque pixel de l'image 901 est définie par ce rapport ; K1 est alors simplement le maximum d'amplitude rencontré dans la zone Zcur de l'image 901 ; on note Pmax1 le point de la zone Zcur où ce maximum est rencontré.

- en 9512, QBE1 qui est une grandeur du C-Scan dite *QuantBumpsEchodyn*, représentant le nombre de maxima locaux rencontrés dans la zone Zcur de l'image 901 à proximité du point Pmax1 d'amplitude maximale. Ce nombre QBE1 est limité aux maximas locaux rencontrés au voisinage de Pmax1, de part et d'autre, mais sans que l'amplitude du signal ne soit redescendue en dessous d'un niveau correspondant au bruit de fond. QBE1 va généralement prendre soit la valeur 1, soit la valeur 2.

Ces deux grandeurs proviennent de l'image 901, via l'extracteur 951, ce que reflète la notation 951(901) sur le dessin. Il s'y ajoute :

- en 9518, RT1 qui est une grandeur représentant le temps de montée de l'écho dans le signal ultrasonore natif dit A-Scan, (il s'agit de l'écart entre le moment où le signal est maximal et le dernier moment antérieur où le signal est au niveau du bruit de fond, exprimé couramment en micro-secondes). Cette grandeur RT1 a été antérieurement mesurée en sortie de l'amplificateur 73 concerné (figure 8A) ; elle a été stockée, par exemple en 891, en correspondance du point du tube qu'elle concerne. C'est ainsi qu'elle peut être récupérée sélectivement par l'extracteur 951. La grandeur RT1 peut maintenant être directement mesurée par l'opérateur sur l'image 903 de la figure 9, ou encore sur le BScan 3D parallélépipédique.

Pour le second capteur, on a :

- en 9521, *K2,* qui est défini comme K1, mais pour l'image 902 au lieu de l'image 901. Dans l'exemple, K2 est simplement le maximum d'amplitude rencontré dans la zone Zcur de l'image 902 ; on note Pmax2 le point de la zone Zcur où ce maximum est rencontré.
- en 9522, QBE2 est défini comme QBE1, mais dans l'image 902 au lieu de l'image 901, et au voisinage de Pmax2. Là aussi, QBE2 va généralement prendre soit la valeur 1, soit la valeur 2.

Ces deux grandeurs proviennent de l'image 902, via l'extracteur 952. Il s'y ajoute :

- en 9528, RT2 qui est une grandeur représentant le temps de montée de l'écho dans le signal natif dit A-Scan. Comme précédemment, cette grandeur RT2 a été antérieurement mesurée en sortie de l'amplificateur 73 concerné (figure 8A) ; elle a été stockée, par exemple en 892, en correspondance du point du tube qu'elle concerne. C'est ainsi qu'elle peut être récupérée sélectivement par l'extracteur 952. La grandeur RT2 peut maintenant être directement mesurée par l'opérateur sur l'image 903A de la figure 9, ou encore sur le BScan 3D parallélépipédique.

La dernière entrée 958 du réseau neuronal est une valeur constante, notée *ConstantA,* qui représente une constante déterminée lors du calage du modèle et résultant de l'apprentissage.

La sortie 998 de la figure 14 est une grandeur indicative du type de l'imperfection et son inclinaison moyenne (définie en fonction du type).

Le cas du degré de profondeur (ou gravité) de l'imperfection est traité selon la figure 15. Les entrées sont les mêmes que pour la figure 14, sauf :

- pour le premier capteur, le bloc 9512 est remplacé par un bloc 9513, qui traite une grandeur EW_1, ou *EchodynWidth,* qui est la largeur à mi-hauteur (50%) de la forme d'onde échodynamique, pour ce premier capteur. Cette grandeur EW_1 est tirée du Cscan.
- de même, pour le second capteur, le bloc 9522 est remplacé par un bloc 9523, qui traite la grandeur EW_2, ou *EchodynWidth,* qui est la largeur à mi-hauteur (50%) de la forme d'onde échodynamique, pour ce second capteur.
- en 959, la constante, notée maintenant *ConstantB,* est différente.
- la sortie 999 est une indication de gravité d'imperfection, notée DD.

On note que, dans les deux cas (figures 14 et 15), un circuit neuronal 970 donné traite un extrait d'image 951 pour l'un des groupes de capteurs ultrasonores, ainsi qu'un extrait d'image 952 correspondant à la même zone, mais provenant d'un autre groupe de capteurs.

La Demanderesse a observé qu'il était possible d'obtenir des résultats très satisfaisants, sous réserve d'un ajustement convenable des paramètres d'un système expert, par exemple des circuits neuronaux, et éventuellement de leur nombre, pour optimiser la prédiction.

De plus, la demanderesse a constaté que par combinaison des informations recueillies par les différents réseaux de neurones il était possible d'affiner encore la prédiction.

Globalement, les paramètres d'entrée du réseau de neurones ou du système expert sont alors des caractéristiques des deux images 3D (rapport de l'amplitude max par rapport à l'amplitude de l'étalon, largeur d'écho, orientation de l'écho représentative de l'obliquité de l'imperfection...) et du contrôle (capteur, dimensions du tube...).

Les paramètres de sorties sont les caractéristiques de l'imperfection (profondeur, inclinaison/ type). La décision et/ou alarme 992 peut se prendre automatiquement à l'aide de critères de décision choisis, à base de seuils, assortis d'une marge de sécurité selon les besoins. Pour définir ces seuils, on peut s'aider des résultats de l'apprentissage.

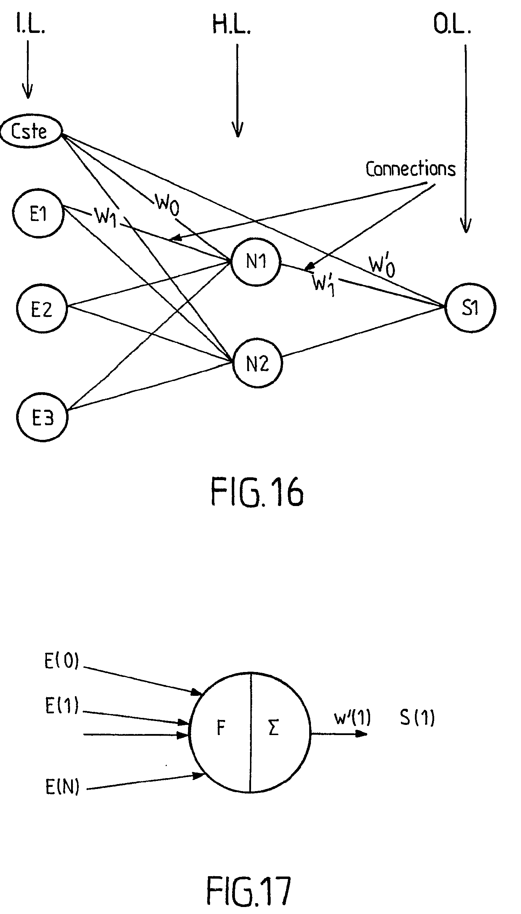

Il est maintenant fait référence à la Figure 16, qui est un modèle du circuit neuronal élémentaire des figures 14 ou 15, pour deux capteurs.

Ce modèle comprend un niveau ou couche d'entrée IL ("Input Layer"), qui regroupe tous les paramètres d'entrée (souvent appelés "neurones d'entrée"). Pour ne pas surcharger la figure, sont seuls représentés trois neurones E1 à E3, plus une constante, qui peut être considérée elle aussi comme un neurone E0. Cette constante est le plus souvent appelée « biais ». En pratique, les neurones d'entrée sont plus nombreux, conformément à la figure 14 ou à la figure 15, selon le cas.

Ensuite est prévu au moins un niveau ou couche HL ("Hidden Layer" ou "couche cachée"), qui comprend k neurones (dont seulement 2 sont représentés pour ne pas surcharger le dessin).

Enfin vient le neurone de sortie S1, qui fournit la décision, sous la forme d'une valeur représentative de l'importance d'une imperfection du tube, par exemple une imperfection longitudinale. Cette sortie correspond au bloc 998 sur la figure 14 et 999 sur la figure 15.

On notera que le "neurone" - constante E0 intervient pour pondérer non seulement la ou les couches cachées HL, mais aussi le neurone de sortie (couche OL ou "Output Layer").

Le comportement général d'un circuit neuronal tel qu'utilisé ici est donné par la formule [11] de l'Annexe 1, où $w_{ij}$ est le poids affecté au signal Xi présent à l'entrée du neurone j.

Dans le circuit prévu ici, un neurone élémentaire se comporte selon la formule [12], comme cela est schématisé sur la figure 17.

La sortie S1 de la figure 16 fournit une valeur estimée qui correspond à la formule [13] de l'annexe 1.

Par apprentissage, la Demanderesse a ajusté les neurones cachés et leurs poids de sorte que la fonction f soit une fonction non-linéaire, continue, dérivable et bornée. L'exemple actuellement préféré est la fonction arc-tangente.

On sait qu'un réseau neuronal détermine ses coefficients $w_{ij}$ communément appelés synapses par apprentissage. Cet apprentissage doit faire intervenir typiquement 3 à 10 fois plus d'exemples qu'il y a de poids à calculer, tout en couvrant correctement la plage des conditions de travail désirées.

Partant d'exemples $E_p$ (p = 1 à M), on détermine pour chaque exemple l'écart $D_p$ entre la valeur $S_p$ donnée par le circuit neuronal et la valeur réelle $R_p$ mesurée ou définie expérimentalement. C'est ce que rappelle la formule [14].

La qualité de fonctionnement du circuit neuronal est définie par une grandeur globale d'écart Cg, dite "coût". Elle peut s'exprimer par exemple selon la formule [15], comme une grandeur globale d'écart quadratique pondéré.

L'apprentissage pose différents problèmes dans un cas comme celui du contrôle des imperfections dans les tubes, notamment du fait qu'il s'agit de techniques lourdes, comme déjà indiqué.

La demanderesse a tout d'abord conduit un premier apprentissage sur simulation. On peut utiliser à cet effet le logiciel CIVA développé et commercialisé par le Commissariat à l'Energie Atomique, France. Ce premier apprentissage a permis de repérer les paramètres influents, et de construire une première version du réseau de neurones sur la base d'imperfections virtuelles. La fonction de coût a été optimisée.

La demanderesse a ensuite conduit un second apprentissage combinant les résultats obtenus sur simulation et des imperfections artificielles, c'est-à-dire créées intentionnellement sur des tubes réels. Ce second apprentissage permet de construire une seconde version du réseau de neurones, dont la fonction de coût a également été optimisée.

La demanderesse a ensuite combiné les résultats obtenus sur des imperfections artificielles, et sur un ensemble d'imperfections présentes sur des tubes réels, ces imperfections étant connues avec précision par des mesures faites a posteriori hors la chaîne de fabrication. Cette troisième phase a permis de valider la dernière version du réseau de neurones. Cette version s'est avérée opérationnelle pour la surveillance en fabrication. Toutefois, lors de son implantation sur une installation nouvelle ou modifiée, il convient actuellement de lui faire subir un "calage", à l'aide d'une dizaine d'échantillons artificiels couvrant l'ensemble de la gamme des imperfections à traiter. Il s'ensuit naturellement une optimisation.

Les figures 11, 12, 14 et 15 ont été décrites dans le cadre des capteurs P11 et P12.

Le même principe peut s'appliquer au groupe de capteurs P1. Dans ce cas, il n'y aura pas d'image 2, et le réseau construit a moins de paramètres d'entrée, comme déjà indiqué. Les circuits décrits pour deux capteurs peuvent être utilisés pour un seul, mais sans paramètres d'entrée pour la partie « Image 2 ».

Le même principe peut s'appliquer aussi aux deux groupes de capteurs P21 et P22, chargés de détecter les imperfections transversales, en tenant compte du fait que les capteurs sont pour cette détection inclinés (par exemple de +/-17°) dans un plan passant par l'axe du tube.

On comprendra que, dans chaque cas, il intervient un traitement numérique du type défini par la figure 11, éléments 992 à 996 exceptés. Ce traitement est globalement désigné par 763, conformément à la figure 8, où il est suivi des blocs 764 et 766.

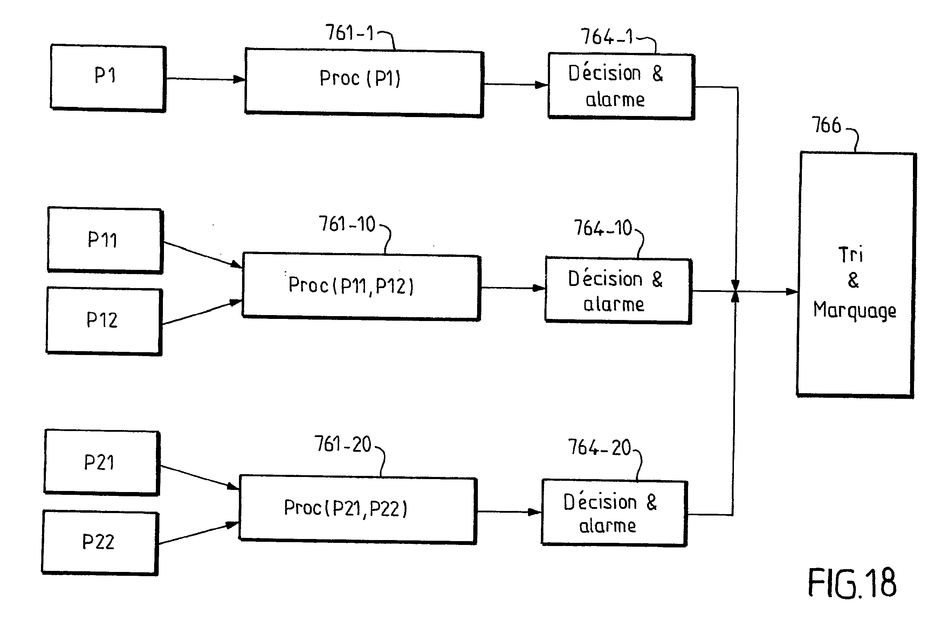

On obtient ainsi un ensemble tel que représenté par la figure 18, avec :

- pour le capteur P1, un traitement 763-1, suivi d'une phase de décision et alarme 764-1 ;
- pour les capteurs P11 et P12, un traitement 763-10, suivi d'une phase de décision et alarme 764-10 ;
- pour les capteurs P21 et P22, un traitement 763-20, suivi d'une phase de décision et alarme 764-20 ;
- les trois phases 764-1, 764-10 et 764-20 étant interprétées conjointement par l'automate de tri et d'alarme 767.

Une variante de la figure 18, non représentée, consiste à ne prévoir qu'une seule phase « Décision & alarme », utilisant directement les sorties des trois traitements 763-1, 763-10 et 763-20.

Le contrôle non destructif proprement dit se fait "à la volée", c'est-à-dire au fur et à mesure que le tube défile dans l'installation de contrôle. La décision issue du traitement les informations décrit plus haut peut être prise elle aussi soit au fur et à mesure que le tube défile dans l'installation de contrôle (avec décision-alarme et marquage "à la volée") ; une variante consiste à prendre cette décision après que toute la longueur du tube ait été inspectée, ou même encore plus tard (après le contrôle de l'ensemble d'un lot de tubes par exemple), chaque tube étant repéré/identifié (N° d'ordre par exemple). Dans ce cas, il est nécessaire que les informations obtenues soient enregistrées (mémorisées). Les enregistrements peuvent faire l'objet d'une analyse postérieure par un opérateur habilité à prendre une décision après avoir analysé les résultats enregistrés et traités par le(s) réseau(x) de neurones.

Bien entendu, compte-tenu des propriétés des circuits neuronaux, il est possible de regrouper au moins partiellement l'ensemble des circuits neuronaux (contenus dans les traitements 763-1, 763-10 et 763-20) en un seul circuit neuronal, ayant toutes les entrées voulues.

Le mode de réalisation décrit utilise directement des réseaux neuronaux à titre d'exemple de systèmes experts. L'invention n'est pas limitée à ce genre de réalisation. Ici, l'expression "agencement du genre circuit neuronal" peut couvrir d'autres techniques d'analyse de données non linéaires, avec ou sans circuits neuronaux.

De façon générale, le convertisseur peut comprendre une entrée d'amplitude maximale dans un sélecteur et une entrée de temps de vol correspondant. Lesdites entrées peuvent fournir les données suffisantes pour la décision de conformité ou de non conformité d'un produit.

Le bloc de transformation peut comprendre un élément d'élimination de données inutiles, un élément de filtrage de zones repérées, un simulateur et un élément d'interprétation. La réduction de la quantité d'information permet une vitesse de traitement plus élevée.

Le simulateur peut comprendre un élément de simulation théorique, un calculateur de tolérance et un algorithme inverse.

L'étage de sortie peut comprendre:

- un combinateur, agencé pour préparer des entrées numériques de circuit neuronal, à partir d'un extrait des images correspondant à une zone d'imperfection présumée, de propriétés de l'imperfection présumée dans la même zone, issues du filtre, et de données de contexte,
- au moins un circuit neuronal, qui reçoit des entrées issues du combinateur,
- un étage numérique de décision et alarme, opérant sur la base de la sortie du circuit neuronal, et
- un automate de tri et de marquage, agencé pour écarter et marquer des tubes décidés non conformes par l'étage numérique de décision et alarme.

Le système ici proposé a été décrit dans le cas du contrôle non destructif lors de la fabrication de tubes sans soudure, cas auquel l'invention s'applique particulièrement bien. Les mêmes techniques peuvent s'appliquer notamment à des produits sidérurgiques longs non nécessairement tubulaires.

Dans le cas de tubes soudés ou autres produits soudés (comme par exemple des tôles ou des plaques), le système s'avère capable de déterminer en plus les limites du cordon de soudure, et par conséquent de localiser les éventuelles imperfections dans le cordon de soudure, qui peuvent être à surveiller. De leur côté, les imperfections situées en dehors des limites du cordon de soudure, qui peuvent correspondre à des inclusions déjà présentes dans le feuillard (ou produit) de base, sont à considérer différemment.

**Annexe**

Section 1

$$Y_i = F\left(\sum_j w_{ij}\, X_i\right) \tag{11}$$

$$S_1 = F\left(\sum_{i=1}^{N} E_i\, w_i + w_0\right) \tag{12}$$

$$S = \sum_{i=1}^{k} S_i\, w_i' + w_0' \tag{13}$$

$$D_p = S_p - R_p \tag{14}$$

$$Cg = \frac{\sum_{p=1}^{p=M} D_p^2}{2\,M} \tag{15}$$

Section 2

$$pfa = \int_{seuil}^{\infty} \frac{1}{\sqrt{2\pi}\ std_b}\ e^{-\frac{x-m_b^2}{2\ std_b^2}}\ dx = Q\left(\frac{seuil - m_b}{std_b}\right) \tag{21}$$

$$seuil = std_b\, Q^{-1}(pfa) + m_b \tag{22}$$

**Revendications**

1. Dispositif formant outil d'aide à l'exploitation, pour le contrôle non destructif, en cours ou en sortie de fabrication, de produits sidérurgiques, tels que des tubes ou autres produits longs, cet outil étant destiné à tirer des informations sur d'éventuelles imperfections du produit, à partir de signaux de retour que captent (73), consécutivement à l'excitation sélective (70) de capteurs ultrasonores émetteurs selon une loi de temps choisie, des capteurs ultrasonores récepteurs formant un agencement de géométrie choisie, monté en couplage ultrasonore avec le produit par l'intermédiaire d'un milieu liquide, avec mouvement relatif de rotation/translation entre le tube et l'agencement de transducteurs, ledit outil d'exploitation étant **caractérisé en ce qu**'il comprend :

   - un convertisseur (891 ; 892) capable d'isoler sélectivement une représentation numérique de possibles échos dans des fenêtres temporelles désignées, en fonction du mouvement relatif de rotation/translation, ladite représentation comprenant l'amplitude et le temps de vol d'au moins un écho, et de générer un graphe 3D parallélépipédique,
   - un bloc de transformation (930) capable de générer une image 3D (901 ; 902) d'imperfections possibles dans le tube à partir du graphe 3D et d'une base de données,
   - un filtre (921 ; 922), capable de déterminer, dans les images (901 ; 902), des zones d'imperfection présumée (Zcur), ainsi que des propriétés de chaque imperfection présumée, et
   - un étage de sortie configuré pour générer un signal de conformité ou de non conformité d'un produit.

**2.** Dispositif selon la revendication 1, dans lequel le convertisseur (891 ; 892) comprend une entrée d'amplitude maximale dans un sélecteur et une entrée de temps de vol correspondant.

**3.** Dispositif selon la revendication 1 ou 2, dans lequel le bloc de transformation comprend un élément d'élimination de données inutiles, un élément de filtrage de zones repérées, un simulateur et un élément d'interprétation.

**4.** Dispositif selon la revendication 3, dans lequel le simulateur comprend un élément de simulation théorique, un calculateur de tolérance et un algorithme inverse.

**5.** Dispositif selon l'une des revendications précédentes, dans lequel l'étage de sortie comprend:

- un combinateur (960), agencé pour préparer des entrées numériques de travail, à partir d'un extrait (951 ; 952) des images correspondant à une zone d'imperfection présumée (Zcur), et de propriétés de l'imperfection présumée dans la même zone, issues du filtre (921 ; 922),
- au moins un agencement du genre circuit neuronal (970), qui reçoit des entrées de travail issues du combinateur (960),
- un étage numérique de décision et alarme (992) opérant sur la base de la sortie de l'agencement du genre circuit neuronal (970), et
- un automate de tri et de marquage (994) agencé pour écarter et marquer des *produits* décidés non conformes par l'étage numérique de décision et alarme (992).

**6.** Dispositif selon l'une des revendications précédentes, dans lequel ledit outil d'exploitation comprend deux convertisseurs (891,892) respectivement consacrés à deux agencements de transducteurs (P11,P12;P21,P22) ultrasonores de géométrie choisie (P11, P12, P21, P22), montés en couplage ultrasonore sensiblement selon une symétrie miroir de la direction de leurs faisceaux ultrasonores respectifs, et le combinateur (960) est agencé pour opérer sélectivement sur les échos de peau interne ou sur les échos de peau externe ou sur les échos intervenant dans la masse du tube, mais en même temps sur les données relatives à l'un et l'autre des deux agencements transducteurs.

**7.** Dispositif selon l'une des revendications précédentes, dans lequel le convertisseur (891 ; 892) est agencé pour isoler sélectivement une représentation numérique de possibles maximums d'échos dans des fenêtres temporelles désignées correspondant à des échos de peau interne, à des échos de peau externe, ainsi que des échos provenant de la masse du tube, respectivement, et le combinateur (960) est agencé pour opérer sélectivement sur les échos de peau interne ou sur les échos de peau externe ou sur les échos intervenus dans la masse.

**8.** Dispositif selon l'une des revendications précédentes, dans lequel le combinateur (960) reçoit au moins une entrée (9511 ; 9521) relative à un extremum d'amplitude de l'image dans la zone d'imperfection présumée.

**9.** Dispositif selon l'une des revendications précédentes, dans lequel le filtre (921 ; 922) est agencé pour produire, en tant que propriétés de chaque imperfection présumée, son obliquité et sa longueur, tandis que le combinateur (960) reçoit des entrées correspondantes d'obliquité d'imperfection (931) et de longueur d'imperfection (932).

**10.** Dispositif selon l'une des revendications précédentes, dans lequel le filtre (921 ; 922), le combinateur (960), le circuit neuronal (970) et l'étage numérique de décision et alarme (992) sont agencés pour opérer itérativement sur une suite de zones d'imperfection présumée (Zcur), déterminées par ledit filtre (921 ; 922).

**11.** Dispositif selon la revendication 10, dans lequel le filtre (921 ; 922), le combinateur (960), le circuit neuronal (970) et l'étage numérique de décision et alarme (992) sont agencés pour opérer alternativement sur la peau interne et la peau externe du tube.

**12.** Dispositif selon l'une des revendications précédentes, dans lequel ledit agencement du genre circuit neuronal comprend :

- un premier circuit neuronal (NC 121- NC 123) propre à évaluer la nature d'une imperfection parmi une pluralité de classes prédéfinies, et
- un second circuit neuronal (NC141- NC143) propre à évaluer la gravité d'une imperfection.

**13.** Dispositif de contrôle non destructif de tubes en cours ou en sortie de fabrication, comprenant :

- un agencement de transducteurs ultrasonores de géométrie choisie, monté en couplage ultrasonore avec le tube par l'intermédiaire d'un milieu couplant, avec mouvement relatif de rotation/translation entre le tube et l'agencement de transducteurs,
- des circuits pour exciter sélectivement (70) ces éléments transducteurs selon une loi de temps choisie, et pour recueillir (73) les signaux de retour qu'ils captent, et
- un outil d'aide à l'exploitation selon l'une des revendications précédentes.

14. Procédé de contrôle non destructif de produits sidérurgiques, tels que des tubes ou autres produits longs, en cours ou en sortie de fabrication, comprenant les étapes suivantes :

a. prévoir un agencement de transducteurs ultrasonores de géométrie choisie, monté en couplage ultrasonore avec le tube par l'intermédiaire d'un milieu couplant, avec mouvement relatif de rotation/translation entre le tube et l'agencement de transducteurs,
b. exciter sélectivement (70) ces éléments transducteurs selon une loi de temps choisie,
c. recueillir (73) les signaux de retour qu'ils captent, afin d'analyser sélectivement ces signaux de retour (760-766), pour en tirer des informations sur d'éventuelles imperfections du tube, lesdites informations comprenant l'amplitude et le temps de vol d'au moins un écho, et générer un graphe 3D parallélépipédique,
d. isoler sélectivement une représentation numérique de possibles échos dans des fenêtres temporelles désignées, en fonction du mouvement relatif de rotation/translation (891 ; 892), et en tirer une image 3D (901 ; 902) d'imperfections possibles dans le tube à partir du graphe 3D et d'une base de données,
e. générer un signal de conformité ou de non conformité d'un produit.

15. Procédé selon la revendication 14, dans lequel l'étape e., comprend:

e1. filtrer (921 ; 922) les images (901 ; 902) selon des critères de filtrage choisis, afin d'y déterminer des zones d'imperfection présumée (Zcur), ainsi que des propriétés de chaque imperfection présumée,
e2. former (960) des entrées numériques de travail, à partir d'un extrait (951 ; 952) des images correspondant à une zone d'imperfection présumée (Zcur), de propriétés de l'imperfection présumée dans la même zones, issues du filtre (921 ; 922), et de données de contexte (740),
e3. appliquer les entrées ainsi formées (960) à au moins un agencement du genre circuit neuronal (970),
e4. traiter numériquement la sortie de l'agencement du genre circuit neuronal (970) selon des critères de décision choisis, pour en tirer une décision et/ou une alarme (992), et
e5. écarter et marquer (994) des tubes décidés non conformes par l'étape e4.

**Patentansprüche**

1. Vorrichtung, die ein funktionelles Werkzeug bildet zum nichtdestruktiven Testen langer Eisen- oder Stahlprodukte während oder am Ende ihrer Herstellung, wobei das Werkzeug so ausgebildet ist, dass es Informationen über mögliche Mängel in dem Produkt aus Rückmeldesignalen entnimmt, die nach einer selektiven Anregung (70) übertragender Ultraschallsensoren gemäß einer ausgewählten Zeitregel erfasst wurden (73) durch Empfänger-Ultraschallsensoren, die eine Anordnung mit einer ausgewählten Geometrie bilden, und die in Ultraschallkopplung mit dem Produkt über ein flüssiges Medium montiert sind mit einer Rotations-/Translations-Relativbewegung zwischen dem Rohr und der Messwertgeberanordnung, wobei das funktionelle Werkzeug aufweist:

- einen Wandler (891; 892), der selektiv eine Darstellung möglicher Echos in bestimmten Zeitfenstern isolieren kann als eine Funktion der Rotations-/Translations-Relativbewegung, wobei die Darstellung die Amplitude und die Laufzeit mindestens eines Echos umfasst, und wobei der Wandler eine parallelepipedförmige 3D-Darstellung erzeugen kann,
- eine Umwandlereinheit (930), die ein 3D-Bild (901, 902) möglicher Mängel in dem Rohr auf der Grundlage der 3D-Darstellung und einer Datenbank erzeugen kann,
- einen Filter (921; 922), der in den Bildern (901, 902) mutmaßliche Mängelbereiche (Zcur) und Eigenschaften eines jeden mutmaßlichen Mangels bestimmen kann, und
- eine Endstufe, die so ausgebildet ist, dass sie ein Produktkonformitätssignal oder ein -Nichtkonformitätssignal erzeugt.

2. Vorrichtung nach Anspruch 1, bei dem der Wandler (891; 892) eine maximale Amplitude in einer Selektor-Eingangsgröße und einer entsprechenden Laufzeit-Eingangsgröße aufweist.

3. Vorrichtung nach Anspruch 1 oder 2, bei dem die Umwandlereinheit ein Element zur Entfernung unnötiger Daten, ein Element zum Filtern genau lokalisierter Bereiche, einen Simulator und eine Auswertungseinheit aufweist.

4. Vorrichtung nach Anspruch 3, bei dem der Simulator ein Element zur theoretischen Simulation, einen Toleranzrechner und einen inversen Algorithmus aufweist.

5. Vorrichtung nach einem der vorstehenden Ansprüche, bei dem die Endstufe aufweist:

   - einen Kombinierer (960), der angeordnet ist, um digitale Eingabewerte für einen neuralen Schaltkreis aus einem Auszug (951; 952) von den Bildern, die einem mutmaßlichen Mangelbereich (Zcur) entsprechen, und Eigenschaften des mutmaßlichen Mangels in dem gleichen Bereich, die von dem Filter (921; 922) kommen, zu erzeugen,
   - mindestens eine Anordnung vom Typ eines neuralen Schaltkreises (970), der Eingabewerte von dem Kombinierer (960) empfängt,
   - eine digitale Entscheidungs- und Alarmstufe (992), die auf der Grundlage eines Ausgabewerts von der Anordnung vom Typ eines neuralen Schaltkreises (970) arbeitet, und
   - einen Sortier- und Markierungsroboter (994), der angeordnet ist, um Produkte zu markieren und zu trennen, die durch die digitale Entscheidungs- und Alarmstufe (992) als nicht konform angenommen wurden.

6. Vorrichtung nach einem der vorstehenden Ansprüche, bei dem das funktionale Werkzeug zwei Wandler (891; 892) aufweist, die jeweils zwei Anordnungen von Ultraschall-Umwandlern (P11, P 12; P21, P22) zugeordnet sind, mit einer ausgewählten Geometrie (P11, P12; P21, P22), die ultraschallgekoppelt im Wesentlichen in einer Spiegelsymmetrie der Richtung ihrer jeweiligen Ultraschallstrahlen angeordnet sind, und wobei der Kombinierer (960) so angeordnet ist, dass er selektiv Innenhautechos oder Außenhautechos oder Echos, die in der Masse des Rohres auftreten, aber gleichzeitig die Daten, die die eine oder die andere der beiden Umwandleranordnungen betreffen, bearbeitet.

7. Vorrichtung nach einem der vorstehenden Ansprüche, wobei der Wandler (891; 892) angeordnet ist, um selektiv eine digitale Darstellung möglicher Echo-Maxima in vorbestimmten Zeitfenstern zu isolieren, die jeweils den Innenhautechos, den Außenhautechos und Echos aus der Masse des Rohres entsprechen, und wobei der Kombinierer (960) angeordnet ist, um selektiv die Innenhautechos oder die Außenhautechos oder Echos aus der Masse zu bearbeiten.

8. Vorrichtung nach einem der vorstehenden Ansprüche, wobei der Kombinierer (960) mindestens einen Eingabewert (9511; 9521) empfängt, der sich auf einen Amplituden-Spitzenwert des Bildes in dem Bereich des mutmaßlichen Mangels bezieht.

9. Vorrichtung nach einem der vorstehenden Ansprüche, wobei der Filter (921; 922) angeordnet ist, um als Eigenschaften eines jeden mutmaßlichen Mangels dessen Schrägheit und dessen Länge darzustellen, während der Kombinierer (960) entsprechende Eingabedaten einer Mangelschrägheit (931) und einer Mangellänge (932) empfängt.

10. Vorrichtung nach einem der vorstehenden Ansprüche, wobei der Filter (921; 922), der Kombinierer (960), der neurale Schaltkreis (970), und die digitale Entscheidungs- und Alarmstufe (992) so angeordnet sind, dass sie wiederholt eine Reihe vermeintlicher Mangelbereiche (Zcur) bearbeiten, die von dem Filter (921; 922) ermittelt wurden.

11. Vorrichtung nach Anspruch 10, wobei der Filter (921; 922), der Kombinierer (960), der neurale Schaltkreis (970) und die digitale Entscheidungs- und Alarmstufe (992) so angeordnet sind, dass sie abwechselnd auf der Innenhaut und der Außenhaut des Rohrs arbeiten.

12. Vorrichtung nach einem der vorstehenden Ansprüche, wobei die Anordnung vom Typ neuraler Schaltkreis aufweist:

   - einen ersten neuralen Schaltkreis (NC121-NC123), der ausgebildet ist, um die Art eines Mangels aus einer Anzahl vordefinierter Klassen zu ermitteln, und
   - einen zweiten neuralen Schaltkreis (NC141-NC143), der ausgebildet ist, um die Schwere eines Mangels zu ermitteln.

13. Nicht-destruktive Testvorrichtung für Rohre während oder am Ende ihrer Herstellung mit:

- einer Anordnung von Ultraschallwandlern mit einer ausgewählten Geometrie, die mit dem Rohr über ein flüssiges Medium ultraschallgekoppelt sind, mit einer Rotations-/Translations-Relativbewegung zwischen dem Rohr und der Umwandleranordnung,
- Schaltkreisen (70), um selektiv die Umwandlerelemente gemäß einer ausgewählten Zeitregel anzuregen, und zum Erfassen (73) von Rückmeldesignalen, die sie empfangen, und
- einem funktionellen Werkzeug nach einem der vorstehenden Ansprüche.

14. Nicht-destruktives Testverfahren für ein längliches Produkt aus Eisen oder Stahl während und am Ende seiner Herstellung, mit folgenden Schritten:

a) Bereitstellen einer Anordnung von Ultraschallumwandlern mit einer ausgewählten Geometrie, die in Ultraschallkopplung mit dem Rohr über ein flüssiges Medium angeordnet sind, mit einer Rotations-/Translations-Relativbewegung zwischen dem Rohr und der Anordnung von Umwandlern,
b) selektives Anregen (70) der Umwandlerelemente gemäß einer ausgewählten Zeitregel,
c) Erfassen (73) von Rückmeldesignalen, die die Umwandlerelemente aufnehmen, um die Rückmeldesignale (760-766) selektiv zu analysieren, um Informationen über mögliche Mängel in dem länglichen Produkt zu entnehmen, wobei die Informationen die Amplitude und die Laufzeit mindestens eines Echos aufweisen, und Erzeugen einer parallelepipedförmigen 3D-Darstellung,
d) selektives Isolieren einer digitalen Darstellung möglicher Echos in vorbestimmten Zeitfenstern als eine Funktion der Rotations-/Translations-Relativbewegung (891; 892), und Entnehmen eines 3D-Bildes (901; 902) möglicher Defekte in dem Rohr aus der digitalen Darstellung und einer Datenbank, und
e) Erzeugen eines Produktkonformitäts- oder - Nichtkonformitätssignals.

15. Verfahren nach Anspruch 14, bei dem der Erzeugungsschritt e) aufweist:

e1) Filtern (921; 922) der Bilder (901; 902) gemäß ausgewählten Filterkriterien, um dort vermeintliche Mängelbereiche (Zcur) und Eigenschaften eines jeden mutmaßlichen Mangels zu bestimmen,
e2) Bilden (960) von digitalen Arbeitseingabewerten aus einem Auszug (951; 952) von den Bildern, die einem vermeintlichen Mangelbereich (Zcur) entsprechen, von Eigenschaften des vermeintlichen Mangels in demselben Bereich, die von dem Filter (921, 922) stammen, und von kontextabhängigen Daten (740),
e3) Eingeben der so gebildeten Eingabedaten (960) in mindestens eine Anordnung vom Typ neuraler Schaltkreis (970),
e4) digitales Verarbeiten eines Ausgabewertes der Anordnung vom Typ neuraler Schaltkreis (970) gemäß ausgewählten Entscheidungskriterien, um aus der Verarbeitung eine Entscheidung und/oder einen Alarm (992) zu entwickeln, und
e5) Trennen und Markieren (994) von Rohren, die durch die digitale Verarbeitung e4) als nicht konform angesehen werden.

## Claims

1. A device forming an operating tool, for non-destructive testing, during or at an end of production, of iron or steel elongated products, the tool configured to extract information on possible defects in the product, from feedback signals that are captured (73), following selective excitation (70) of transmitting ultrasound sensors according to a selected time rule, by receiving ultrasound sensors forming an arrangement with a selected geometry, mounted in ultrasound coupling with the product via an intermediary of a liquid medium, with relative rotation/translation movement between the pipe and the transducer arrangement, the operating tool comprising:

- a converter (891;892) capable of selectively isolating a digital representation of possible echoes in designated time windows, as a function of the relative rotation/translation movement, the representation including amplitude and time of flight of at least one echo, and of generating a parallelepipedic 3D graph;
- a transformer unit (930) capable of generating a 3D image (901;902) of possible defects in the pipe on the basis of the 3D graph and a database;
- a filter (921;922) capable of determining, in the images (901;902) presumed defect zones (Zcur), and properties of each presumed defect; and
- an output sage configured to generate a product conformity or non-conformity signal.

2. A device according to claim 1, in which the converter (891;892) comprises a maximum amplitude in a selector input and a corresponding time of flight input.

3. A device according to claim 1 or 2, in which the transformer unit comprises an unnecessary data removal element, a pinpointed zones filtering element, a simulator, and an interpretation unit.

4. A device according to claim 3, in which the simulator comprises a theoretical simulation element, a tolerance calculator, and an inverse algorithm.

5. A device according to one of the preceding claims, in which the output stage comprises:

   - a combiner (960) arranged to prepare digital inputs for a neural circuit, from an extract (951;952) of the images corresponding to a presumed defect zone (Zcur), and properties of the presumed defect in a same zone, coming from the filter (921;922);
   - at least one arrangement of neural circuit type (970), that receives inputs from the combiner (960);
   - a digital decision and alarm stage (992) operating on the basis of an output from the arrangement of the neural circuit type (970), and
   - a sorting and marking robot (994) arranged to separate and mark products that have been deemed not to conform by the decision and alarm digital stage (992).

6. A device according to one of the preceding claims, in which the operating tool comprises two converters (891;892) respectively dedicated to two arrangements of ultrasound transducers (P11,P12;P21,P22) with a selected geometry (P11,P12;P21,P22), mounted in ultrasound coupling roughly according to a mirrored symmetry of the direction of their respective ultrasound beams, and wherein the combiner (960) is arranged to operate selectively on inner skin echoes or on outer skin echoes or the echoes taking place in a mass of the pipe, but at a same time on the data relating to one or other of the two transducer arrangements.

7. A device according to one of the preceding claims, wherein the converter (891;892) is arranged to selectively isolate a digital representation of possible echo maxima in designated time windows corresponding to inner skin echoes, outer skin echoes, and echoes from a mass of the pipe, respectively, and wherein the combiner (960) is arranged to operate selectively on the inner skin echoes or the outer skin echoes or the echoes occurring in the mass.

8. A device according to one of the preceding claims, wherein the combiner (960) receives at least one input (9511;9521) relating to an amplitude extremum of the image in the presumed defect zone.

9. A device according to one of the preceding claims, wherein the filter (921;922) is arranged to produce, as properties of each presumed defect, its obliquity and its length, while the combiner (960) receives corresponding inputs of defect obliquity (931) and defect length (932).

10. A device according to one of the preceding claims, wherein the filter (921;922), the combiner (960), the neural circuit (970), and the digital decision and alarm stage (992) are arranged to operate iteratively on a series of presumed defect zones (Zcur), determined by the filter (921;922).

11. A device according to claim 10, wherein the filter (921;922), the combiner (960), the neural circui (970), and the digital decision and alarm stage (992) are arranged to operate alternately on an inner skin and outer skin of the pipe.

12. A device according to one of the preceding claims, wherein the arrangement of the neural circuit type comprises:

   - a first neural circuit (NC121-NC123) configured to evaluate a nature of a defect among a number of predefined classes; and
   - a second neural circuit (NC141-NC143) configured to evaluate a severity of a defect.

13. A non-destructive testing device for pipes during or at an end of production, comprising:

   - an arrangement of ultrasound transducers with a selected geometry, mounted in ultrasound coupling with the pipe via the intermediary of a liquid medium, with relative rotation/translation movement between the pipe and the transducer arrangement;
   - circuits to selectively excite (70) the transducer elements according to a selected time rule, and for gathering (73) feedback signals they capture; and

- an operational tool according to one of the preceding claims.

14. A non-destructive testing process for an iron or steel elongated product, during or at an end of production, comprising:

a) providing an arrangement of ultrasound transducers with a selected geometry, mounted in ultrasound coupling with the pipe via an intermediary of a liquid medium, with relative rotation/translation movement between the pipe and the arrangement of transducers;

b) selectively exciting (70) the transducer elements according to a selected time rule;

c) gathering (73) feedback signals the transducer elements capture, to selectively analyze the feedback signals (760-766), so as to extract information on possible defects in the elongated product, the information composing amplitude and time of flight of at least one echo, and generating a parallelepipedic 3D graph;

d) selectively isolating a digital representation of possible echoes in designated time windows, as a function of the relative rotation/translation movement (891;892), and extracting from the digital representation a 3D image (901;902) of possible defects in the pipe from the 3D graph and a database; and

e) generating a product conformity or non-conformity signal.

15. A process according to claim 14 in which the generating e) comprises:

- e1) filtering (921;922) the images (901;902) according to selected filter criteria, to determine presumed defect zones (Zcur) there, and properties of each presumed defect;

- e2) forming (960) working digital inputs, from an extract (951;952) of the images corresponding to a presumed defect zone (Zcur), properties of the presumed defect in a same zone, coming from the filter (921;922), and contextual data (740);

- e3) applying the inputs (960) so formed to at least one arrangement of a neural circuit type (970);

- e4) digitally processing an output from the arrangement of the neural circuit type (970) according to selected decision criteria, to draw from the processing a decision and/or an alarm (992); and

e5) separating and marking (994) pipes considered not to conform by the digitally processing e4).

FIG.1

FIG.2

FIG.3A        FIG.3B        FIG.3C

FIG.4

FIG.5A

FIG.5B

interface plexi/eau 7µs

Ex1 interface eau/acier 70,4µs

133,8µs

Inf1

1er écho de fond 72,4µs

2ème écho de fond 74,4µs

135,8µs

135,8µs

14µs

137,8µs

3ème écho de fond 76,4µs

77,4µs

77,4µs

40

91 ~35µs

100 ~31,7µs

T ~1µs

FIG.6

FIG.6A

FIG.6B

FIG.7

FIG.8

FIG.8A

740

Px-1 → 781 → 782

Px-i → 781 → 782

782 → 788 → 769

FIG.8B

FIG.9

FIG.9A

TYPE 1
Angle 0°

**FIG.10A**

TYPE 2
Angle 0°

**FIG.10B**

TYPE 3
Angle 20 à 80°

**FIG.10C**

TYPE 4
Angle 20 à 80°

**FIG.10D**

EP 2 223 098 B1

FIG.11

930

891

892

931

932

933

935

934

937

936

901

902

FIG.11A

Début d'image — 801

Filtre -> 1ère zone Z0 à traiter
Zcur = Z0 — 803

Zone en cours Zcur — 805

Extraction des données de la zone Zcur
dans images 1 et 2 — 807

Extraction des données pour la zone Zcur
dans la préparation des images 1 et 2 — 809

Traitement neuronal avec les données extraites
pour la zone Zcur — 811

Mémorisation sélective
des résultats pour la zone Zcur — 813

Autre zone Zi à traiter
dans l'image ? — 820

Zcur = Zi — 821

Fin pour cette image — 822

FIG.12

FIG.13

FIG.14

IL                    HL              OL

7410 — [ Int/Ext ]

7401 — [ WT/OD ]

7402 [ Freq ]
740 —

7403 [ ProbDiam. ]

970

NC141

9201 — [ Obliq ]
921 —
[ Long. ]
9202 —

9511 — [ K1 ]
951(901) —
[ EW_1 ]
9513 —

NC142

999

[ DD ]

951(891) — [ A Scan RT1 ]
9518 —

9521 — [ K2 ]
952(902) —
[ EW_2 ]
9523 —

NC143

952(892) — [ A Scan RT2 ]
9528 —

959 — [ Constant B ]

FIG.15

I.L.                    H.L.                    O.L.

Connections

FIG.16

FIG.17

FIG.18

EP 2 223 098 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2903187
- FR 2796153
- DE 4201502 C2
- JP 11002626 A
- JP 8110323 A
- JP 2003279550 A

**Littérature non-brevet citée dans la description**

- **ZAOUI ; MARCHAND ; RAZEK.** Localization and Shape Classification of Defects using the Finite Element Method and the Neural Networks. *NDT.NET,* Août 1999, vol. IV (8
- **LAWSON ; PARKER.** Automatic Detection of Defect in Industrial ultrasound images using a neural Network. *Proc. of Int. Symposium on Lasers, Optics, and Vision for Productivity in Manufacturing I (Vision Systems: Applications), June 1996, Proc. of SPIE,* 1996, vol. 2786, 37-47
- **DUNLOP ; MCNAB.** Shape Classification of Flaw Indications in 3-Dimensional ultrasonic Images. *IEE Proceedings - Science, Measurement and Technology,* Juillet 1995, vol. 142 (4), 307-312
- **RAVANBOD.** Application of neuro-fuzzy techniques in oil pipelines ultrasonic nondestructive testing. *NDT&E International,* 2005, vol. 38, 643-653